(19) Europäisches Patentamt / European Patent Office / Office européen des brevets

(11) **EP 2 796 604 A1**

(12) **EUROPEAN PATENT APPLICATION**
published in accordance with Art. 153(4) EPC

(43) Date of publication:
29.10.2014  Bulletin 2014/44

(21) Application number: 12859569.1

(22) Date of filing: 20.12.2012

(51) Int Cl.:
*D04H 1/72* (2012.01)    *B29C 43/18* (2006.01)
*C08J 5/04* (2006.01)

(86) International application number:
PCT/JP2012/083146

(87) International publication number:
WO 2013/094706 (27.06.2013 Gazette 2013/26)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: 22.12.2011  JP 2011281509

(71) Applicant: Teijin Limited
**Osaka-shi, Osaka 541-0054 (JP)**

(72) Inventors:
- **OOTSUBO Makoto**
  **Shizuoka 412-0048 (JP)**
- **KONAGAI Yuhei**
  **Shizuoka 412-0048 (JP)**

(74) Representative: **Hallybone, Huw George**
**Carpmaels & Ransford LLP**
**One Southampton Row**
**London WC1B 5HA (GB)**

(54) **RANDOM MAT AND REINFORCING FIBER COMPOSITE MATERIAL**

(57)    Provided is a random mat suitable as a preform for a shaped product having an upright portion such as a rib.

The random mat includes reinforcing fibers wherein the content of reinforcing fibers having a fiber length of 3 mm or more and less than 15 mm is 50 to 100% by mass based on all the reinforcing fibers contained in the random mat and the content of reinforcing fibers having a fiber length of 15 mm or more and 50 mm or less is 0 to 50% by mass based on all the reinforcing fibers contained in the random mat, and satisfies specific values of fiber areal weight and the degree of opening.

*FIG.1*

**Description**

Technical Field

The present invention relates to a random mat for use as a preform for a shaped product of a fiber-reinforced composite material, a shaped product obtained therefrom, a fiber-reinforced composite material obtained using the random mat of the invention, and a manufacturing method for the fiber-reinforced composite material. In particular, the invention relates to a random mat suitable, as a preform, for a shaped product having upright portions such as ribs.

Background Art

Fiber-reinforced composite materials in which carbon fibers, aramid fibers, glass fibers, and the like are used as a reinforcing fiber have been extensively used in a structural material for an aircraft, a motor vehicle, and the like, a general industry and a sports application and the like, such as a tennis racket, a golf club shaft, and a fishing rod, and the like, owing to high specific strength and specific elasticity thereof. Forms of the reinforcing fibers for use in these applications include a woven fabric formed from continuous fibers, a UD sheet constituted by unidirectionally aligned parallel fibers, a random sheet and a nonwoven fabric formed from cut fibers, and the like.

In general, a woven fabric, a UD sheet, and the like, which employ continuous fibers, are stacked at various angles, e.g., 0/+45/-45/90, because of the anisotropy of the fibers and are stacked, for example, plane-symmetrically in order to prevent the shaped product from warping. Such complicated stacking steps have been one cause of increasing costs of fiber-reinforced composite materials.

Consequently, by using a random mat, which has been rendered isotropic in advance, a relatively inexpensive fiber-reinforced composite material can be obtained. This random mat can be obtained, for example, by a spray-up method (dry process) in which cut reinforcing fibers are blown into a shaping mold either alone or simultaneously with a thermosetting resin, by a method (wet process) in which reinforcing fibers which have been cut in advance are added to a binder-containing slurry and paper-making is performed, or the like. However, use of the dry manufacturing method makes it possible to obtain a random mat at a lower cost since the apparatus is relatively small.

A frequently used technique of the dry manufacturing method is one in which continuous fibers are used, and blown when being cut, and a rotary cut is mostly used therein. However, where a blade pitch is increased in order to make a fiber length long, reduced frequency of the cutting renders discharge of the fibers discontinuous. As a result, the mat has local unevenness in fiber areal weight, and such thickness unevenness is serious especially in the case of forming mats having a small fiber areal weight. There has hence been a problem in that the mats have a poor surface appearance.

Meanwhile, another factor which increases the cost of fiber-reinforced composite materials is that molding time is long. Usually, fiber-reinforced composite materials are obtained from a material called a prepreg, which have been obtained by impregnating a reinforcing-fiber base material with a thermosetting resin in advance, by heating and pressing the material for 2 hours or longer using an autoclave. In recent years, an RTM method has been proposed in which a reinforcing-fiber base material not impregnated with a resin is set in a mold and a thermosetting resin is then poured thereinto, and a remarkable reduction in molding time has been attained. However, even in the case of using the RTM method, 10 minutes or a longer period is necessary for one component to be molded.

Consequently, composites obtained using a thermoplastic resin as a matrix, in place of the conventional thermosetting resin, have attracted attention. However, a thermoplastic resin generally has higher viscosity as compared with a thermosetting resin, and therefore has had a problem in that impregnation of fiber base materials with the resin requires a long time period, resulting in an increase in tact time to molding.

A technique called thermoplastic stamping mold (TP-SMC) has been proposed as a technique for solving those problems. This is a molding method which includes heating chopped fibers impregnated in advance with a thermoplastic resin to the melting point or higher or a temperature making the resin flowable or more, putting them into a part of a mold, immediately closing the mold , and allowing the fibers and the resin to flow within the mold to thereby obtain a shape of a product, followed by cooling and molding. In this technique, molding can be completed in a period as short as about 1 minute by using fibers impregnated with a resin in advance. There are patent documents 1 and 2, which relate to chopped fiber bundles and a manufacturing method for a molding material. These are methods for using a molding material called SMC or stampable sheet. However, as compared with the case of fiber-reinforced composite materials employing a thermosetting resin as a matrix, the thermoplastic stamping molding has a disadvantage in that since the viscosity is high due to a difference in resin molecular weight and a disadvantage in that because of performing molding by fluidizing, a relatively high molding pressure is necessary for filling the fibers and resin especially into complicated shapes such as a rib and a boss. A large investment in equipment and a high maintenance cost have hence been necessary for manufacturing a large shaped product.

Citation Lists

Patent Documents

> Patent Document 1: JP-A-2009-114611
> Patent Document 2: JP-A-2009-114612

Summary of Invention

Problems that Invention is to Solve

A subject for the invention is to provide: a random mat which is for use as a preform for a shaped product of a fiber-reinforced composite material and from which a complicated three-dimensional shape having an upright portion such as a rib or a boss can be obtained by integral molding even under low-pressure conditions; a shaped product obtained therefrom; a fiber-reinforced composite material obtained using the random mat of the invention; and a manufacturing method for the fiber-reinforced composite material. Another subject is to provide a random mat from which a shaped product having excellent isotropy can be obtained.

Means for Solving the Problems

The present invention has found that a random mat constituted by both a thermoplastic resin and reinforcing fibers which satisfy specific bundling or opening conditions and have fiber lengths within a specific range makes it possible to control the flowability thereof during molding so as to be suitable. The invention has been thus achieved. Namely, the present invention is a random mat which includes reinforcing fibers having a fiber length of 3-50 mm and satisfies the following i) to v), a shaped product obtained therefrom, a fiber-reinforced composite material obtained using the random mat of the invention, and a manufacturing method for the composite material.

 i) The content of reinforcing fibers having a fiber length of 3 mm or more and less than 15 mm is 50 to 100% by mass based on all the reinforcing fibers contained in the random mat, and the content of reinforcing fibers having a fiber length of 15 mm or more and 50 mm or less is 0 to 50% by mass based on all the reinforcing fibers contained in the random mat;
 ii) a fiber areal weight of the reinforcing fibers is 25 to 10,000 g/m$^2$;
 iii) the reinforcing fibers includes both of single fibers less than the reinforcing fibers of the critical number of single fiber, defined by the following expression (1), and a reinforcing fiber bundle (A) constituted by the reinforcing fibers of the critical number of single fiber or more;
 iv) a ratio of the reinforcing fiber bundle (A) to all the reinforcing fibers contained in the mat is 50 vol% or more and less than 99 vol%; and
 v) the average number of fibers (N) in the reinforcing fiber bundle (A) satisfies the following expression (2):

$$\text{Critical number of single fiber} = 600/D \qquad (1)$$

$$1.5 \times 10^4/D^2 < N < 3 \times 10^5/D^2 \qquad (2)$$

(wherein D is the average fiber diameter ($\mu$m) of single reinforcing fibers).

Advantage of Invention

The random mat of the invention is suitable for use as a preform for a shaped product of a fiber-reinforced composite material. Since the random mat has excellent flowability during molding, an upright portion of a complicated three-dimensional shape such as a rib or a boss, which longitudinally extends from a horizontal portion, can be easily formed at a relatively low pressure. Consequently, the shape of a product can be formed from the random mat of the invention using a minimum necessary amount of materials, and a trimming step can be eliminated. A considerable reduction in the amount of materials to be discarded and the resultant cost reduction can hence be expected. Furthermore, the random mat of the invention can be used as a preform for various constituent members such as inside sheets, outside sheets, and constituent members for motor vehicles, frames or housings of various electrical products or machines, and the like.

Brief Description of Drawings

[Fig. 1] A diagrammatic view of a cutting step
[Fig. 2] A diagrammatic front view and cross-sectional view of a rotary separating cutter
[Fig. 3] Views for illustrating knife angle
[Fig. 4] Diagrammatic views of a cutter having blades parallel with the direction of fibers
[Fig. 5] A rotary cutter in which a blade pitch changes continuously
[Fig. 6] Schematic views of a mold which is for illustrating an embodiment of the invention
[Fig. 7] A schematic view of an example of shaped products, the view being for illustrating an embodiment of the invention
[Fig. 8] Portions where test specimens are cut out in a shaped product having a boss and a rib

Description of Embodiments

[Random Mat]

The random mat of the invention includes reinforcing fibers having a fiber length of 3 to 50 mm and satisfies the following i) to v):

i) the content of reinforcing fibers having a fiber length of 3 mm or more and less than 15 mm is 50 to 100% by mass based on all the reinforcing fibers contained in the random mat, and the content of reinforcing fibers having a fiber length of 15 mm or more and 50 mm or less is 0 to 50% by mass based on all the reinforcing fibers contained in the random mat,
ii) a fiber areal weight of the reinforcing fibers is 25 to 10,000 $g/m^2$,
iii) the reinforcing fibers include single fibers less than the reinforcing fibers of the critical number of single fiber, defined by the following expression (1), and a reinforcing fiber bundle (A) constituted by the reinforcing fibers of the critical number of more single fibers or more,
iv) the ratio of the reinforcing fiber bundle (A) to all the reinforcing fibers contained in the random mat is 50 vol% or more and less than 99 vol%, and
v) the average number of fibers (N) in the reinforcing fiber bundle (A) satisfies the following expression (2):

$$\text{Critical number of single fiber} = 600/D \qquad (1)$$

$$1.5 \times 10^4/D^2 < N < 3 \times 10^5/D^2 \qquad (2)$$

(wherein D is the average fiber diameter ($\mu$m) of single reinforcing fibers).

In the invention, there are cases where the ratio of the reinforcing fiber bundle (A) to all the reinforcing fibers contained in the random mat (vol%) is referred to as the volume ratio thereof to all the mat fibers (vol%).

Within a plane of the random mat, the reinforcing fibers are not aligned in a specific direction but are dispersedly arranged y in random directions.

The random mat of the invention is a material excellent in-plane isotropy. When obtaining a shaped product from the random mat, the isotropy of the reinforcing fibers in the random mat is maintained also in the shaped product. By obtaining a shaped product from the random mat and determining a ratio of tensile moduli for two directions perpendicular to each other, the isotropy of the random mat and that of the shaped product obtained therefrom can be quantitatively evaluated. When a ratio obtained by dividing the larger value of moduli for the two directions in the shaped product obtained from the random mat by the smaller one does not exceed 2, this shaped product is regarded as being isotropic. In the case where the ratio does not exceed 1.3, this shaped product is regarded as having excellent isotropy.

The fiber areal weight of the reinforcing fibers in the random mat is in the range of 25 to 10,000 $g/m^2$. The random mat is useful as a prepreg, and the fiber areal weight thereof can be selected from a wide range in accordance with a desired molding. The fiber areal weight thereof is preferably 25 to 4,500 g/m$^2$, more preferably 25 to 3,000 g/m$^2$.

[Reinforcing Fibers]

The reinforcing fibers contained in the random mat are discontinuous, and the reinforcing fibers include reinforcing fibers having a fiber length of 3 mm or more and less than 15 mm (hereinafter often referred to as reinforcing fibers (B)). Reinforcing fibers (B) are a group of fibers which greatly contribute to flowability during molding. The range of fiber lengths of the reinforcing fibers (B) is preferably 5 to 15 mm, more preferably 7 to 13 mm, even more preferably 7 to 10 mm. The amount of the reinforcing fibers (B) is 50 to 100% by mass, preferably 70 to 100% by mass, more preferably 90 to 100% by mass, based on all the reinforcing fibers contained in the random mat. In the preferred method for cutting reinforcing fibers to be described later, where reinforcing fibers are cut into a fixed length and a random mat is formed therefrom, the average fiber length is substantially equal to the length of the cut fibers.

Meanwhile, in the invention, there are cases where the content in % by mass of specific reinforcing fibers based on all the reinforcing fibers contained in the random mat is referred to as a mass ratio (%) to all the mat fibers.

Besides reinforcing fibers (B), which have a fiber length of 3 mm or more and less than 15 mm, reinforcing fibers having a fiber length of 15 mm or more and 50 mm or less (hereinafter often referred to as reinforcing fibers (C)) can also be used in combination. Since the reinforcing fibers (C) have a relatively large fiber length, mechanical properties (in particular, long-term fatigue strength) can be ensured therewith. However, too long reinforcing fibers impair flowability. Consequently, the range of fiber lengths of the reinforcing fibers (C) is preferably 17 to 40 mm, more preferably 20 to 30 mm. The ratio of the reinforcing fibers (C) to all the mat fibers is 0 to 50% by mass, more preferably 0 to 10% by mass, even more preferably 2 to 10% by mass.

Methods for attaining such a fiber length distribution are not particularly limited, and examples thereof include a method in which the pitch of blades for cutting a fiber bundle is adjusted in the preferred method for forming a random mat to be described later. Fibers can be cut while continuously changing the fiber length, by using a plurality of blade rows differing in a blade pitch or by using a rotary cutter in which a pitch of blades changes continuously.

Fiber lengths are expressed in terms of a fiber length distribution determined by measuring the fiber lengths of reinforcing fibers contained in the random mat obtained. Examples of methods for measuring the fiber lengths include a method in which lengths of randomly extracted 100 fibers are measured with a vernier caliper or the like down to the order of 1 mm and a distribution thereof is determined. By employing the preferred method for cutting reinforcing fibers to be described later, the lengths of the reinforcing fibers contained in the random mat can be controlled so as to be the fixed length or to have a given length distribution.

It is preferable that the reinforcing fibers contained in the random mat is at least one selected from the group consisting of carbon fibers, aramid fibers, and glass fibers. These fibers may be used in combination. Preferred of these are carbon fibers, from the standpoint that composite materials which have excellent strength in addition to being lightweight can be provided. As the carbon fibers, carbon fibers made from polyacrylonitrile fibers as a precursor (hereinafter often referred to as polyacrylonitrile-based carbon fibers or PAN-based carbon fibers) are particularly preferred. In the case of carbon fibers, the average fiber diameter thereof is preferably 3 to 12 $\mu$m, more preferably 5 to 7 $\mu$m.

It is preferable that the reinforcing fibers to be used is the ones to which a sizing agent is adhered. The amount of the sizing agent is preferably 0 to 10 parts by mass per 100 parts by mass of the reinforcing fibers.

In the case of glass fibers, the average fiber diameter thereof is preferably 3 to 20 $\mu$m, more preferably 10 to 15 $\mu$m.

[Degree of Opening]

The random mat of the invention is characterized in that a ratio of a reinforcing fiber bundle (A) constituted by the reinforcing fibers of a critical number of single fiber or more, being defined by the following expression (1):

$$\text{Critical number of single fiber} = 600/D \qquad (1)$$

(wherein D is the average fiber diameter ($\mu$m) of single reinforcing fibers), to all the fibers contained in the random mat is 50 vol% or more and less than 99 vol%. The reinforcing fibers present in the random mat include, besides reinforcing-fiber bundles (A), fibers in a state of a single fiber or a fiber bundle constituted by single fibers less than the critical number of single fiber.

Namely, the random mat of the invention is characterized in that the reinforcing fiber bundle (A) constituted by: the reinforcing fibers of the critical number of single fiber or more, the critical number being defined by depending on the average fiber diameter, are present in an amount of 50 vol% or more and less than 99 vol%, that is in the reinforcing fiber bundle (A), the degree of opening of the reinforcing fibers is controlled, and the reinforcing fiber bundle is constituted by reinforcing fibers of a specific number or more; and other opened reinforcing fibers in a specific ratio. The amount of the reinforcing fiber bundle (A) to be present can be controlled so as to be 50 vol% or more and less than 99 vol% by, for example, regulating the pressure of air blown in the opening step in the preferred manufacturing method to be described later. Alternatively, the amount thereof can be controlled by regulating the size of the fiber bundle, such as the width of the bundle or the number of fibers per unit width, to be subjected to the cutting step. Specific examples thereof include a method in which a fiber bundle is widened by opening or the like and is then subjected to the cutting step, and a method in which a slitting step is provided before the cutting step. Examples thereof further include a method in which so-called separating knife including a large number of short blades arranged are used to cut a fiber bundle and a method in which such a separating knife are used to cut and simultaneously slit a fiber bundle. Preferred conditions are described in the section Opening Step.

In the case where the ratio of the reinforcing fiber bundle (A) to all the fibers is less than 50 vol%, when the random mat of the invention is molded, there is an advantage in that a composite material having excellent surface quality is obtained. However, since a fiber-reinforced composite material excellent in mechanical properties is difficult to be obtained and further a ratio of reinforcing fibers in a state of a single fiber is high, entanglements of the fibers are increased to impair flowability. In the case where the ratio of the reinforcing fiber bundle (A) is 99 vol% or more, entanglements of fibers are so slight that a force of constriction among fibers is low although the flowability itself is satisfactory. As a result, a fiber alignment is liable to be made along the flow direction proceeds and making it impossible to ensure isotropy. Therefore, such a too high ratio defeats the objects of the invention. The ratio of the reinforcing fiber bundle (A) is more preferably 60 vol% or more and less than 95 vol%.

The random mat is further characterized in that the average number of fibers (N) in the reinforcing fiber bundle (A) constituted by the reinforcing fibers of the critical number of single fiber or more, satisfies the following expression (2):

$$1.5\times10^{4}/D^{2} < N < 3\times10^{5}/D^{2} \qquad\qquad (2)$$

(wherein D is the average fiber diameter ($\mu$m) of single reinforcing fibers).

The average number of fibers (N) in the reinforcing fiber bundle (A) can be controlled by adjusting the size such as, a width of the bundle or the number of fibers per an unit width, of the fiber bundle to be subjected to the cutting step in the preferred manufacturing method to be described later. Specific examples thereof include a method in which a fiber bundle is widened by opening or the like and is subjected to the cutting step and a method in which a slitting step is provided before the cutting step. A fiber bundle may be slit simultaneously with the cutting.

It is also possible to control the average number of fibers (N) in the reinforcing fiber bundle (A) by adjusting the degree of opening of cut fiber bundles by, for example, controlling the pressure of air blown in the opening step. Preferred conditions are described in the sections Opening Step and Cutting Step.

Specifically, where the average fiber diameter of the reinforcing fibers contained in the random mat is 5 to 7 $\mu$m, the critical number of single fiber is 86 to 120; and in the case where the average fiber diameter of the reinforcing fibers is 5 $\mu$m, the average number of fibers in the fiber bundle is in the range of 600 to 12,000, and preferably 1,000 to 9,000. In the case where the average fiber diameter of the reinforcing fibers is 7 $\mu$m, the average number of fibers in the fiber bundle is in the range of 306 to 6,122, and preferably 500 to 4,900.

Where the average number of fibers (N) in the reinforcing fiber bundle (A) is $1.5\times10^{4}/D^{2}$ or less, it is difficult to obtain a high fiber volume fraction (Vf). Where the average number of fibers (N) in the reinforcing fiber bundle (A) is $3\times10^{5}/D^{2}$ or larger, thick portions are locally generated to liable to be a factor of voids, and further after fluidizing, anisotropy tends to be developed. Therefore, such a case defeats the objectives of the invention. Furthermore, where a thin-walled composite material as thin as 1 mm or less is to be obtained, use of fibers simply separated results in enhanced unevenness in density, making it impossible to obtain satisfactory properties. Meanwhile, in the case where the fibers have been completely opened, it is easy to obtain thinner products, but fiber entanglements are enhanced and this not only makes it impossible to obtain products having a high fiber volume fraction but also to impair flowability. Use of such fibers is hence undesirable.

For the same reasons as shown above, it is preferable in the invention that with respect to the reinforcing fibers (B), which have a fiber length of 3 mm or more and less than 15 mm, the average number of fibers ($N_B$) in a reinforcing fiber bundle ($A_B$) constituted by the reinforcing fibers of the critical number of single fiber, the critical number being defined by expression (1), satisfies the following expression (2B):

$$1.5\times10^{4}/D_B{}^{2} < N_B < 3\times10^{5}/D_B{}^{2} \qquad\qquad (2B)$$

(wherein $D_B$ is the average fiber diameter (μm) of single reinforcing fibers).

In the invention, in the case where the reinforcing fibers (C) having a fiber length of 15 mm or more and 50 mm or less are absent, the average number of fibers ($N_B$) is, of course, equal to the average number of fibers (N).

Furthermore, with respect to reinforcing fibers (C) having a fiber length of 15 mm or more and 50 mm or less, it is preferable that the average number of fibers ($N_C$) in a reinforcing fiber bundle ($A_C$) constituted by the reinforcing fibers of the critical number of single fiber or more, the critical number being defined by expression (1), satisfies the following expression (2C):

$$5.0 \times 10^4/D_C{}^2 < N_C < 3 \times 10^5/D_C{}^2 \qquad\qquad (2C)$$

(wherein $D_C$ is the average fiber diameter (μm) of single reinforcing fibers having a fiber length of 15 mm or more and 50 mm or less).

Reinforcing fibers (C) are a component having a relatively large fiber length. In the case where the number of fibers constituting a bundle is relatively large, not only it is easy to ensure the linearity of fibers in the random mat and mechanical properties are enhanced, but also fiber entanglements are prevented to thereby improve flowability.

Meanwhile, in the invention, where only one kind of reinforcing fibers is used, the average fiber diameter $D_B$ of the reinforcing fibers having a fiber length of 3 mm or more and 50 mm or less (reinforcing fibers (B)) and the average fiber diameter $D_C$ of the reinforcing fibers having a fiber length of 15 mm or more and 50 mm or less (reinforcing fibers (C)) are, of course, equal to the average fiber diameter D involved in expressions (1) and (2).

In the invention, where a ratio of the average fiber length of the reinforcing fibers having a fiber length of 15mm or more and 50 mm or less (reinforcing fibers (C)) to the average fiber length of the reinforcing fibers having a fiber length of 3 mm or more and less than 15 mm (reinforcing fibers (B)) is 1.5-10, a shaped product which is especially excellent in terms of both moldability and strength can be obtained, and therefore that range of the ratio is preferred. The ratio thereof is more preferably 1.5-5.

The random mat including the reinforcing fiber bundle (A) constituted by both of the reinforcing fibers of the critical number of single fiber, the critical number being defined by expression (1), and reinforcing fibers which are in a state of single fiber or are a bundle constituted by the reinforcing fibers of less than the critical number of single fiber can be obtained as a random mat having high properties and high flowability. The random mat of the invention is especially suitable for manufacturing the shaped product having an upright portion such as a rib or a boss to be described later.

The random mat of the invention can be made to have various thicknesses. This random mat is suitable for use as a preform for obtaining a thin-walled shaped product having a thickness of about 0.2 to 1 mm. Namely, it is possible according to the invention to form a random mat having a thickness of various desired shaped products. In particular, such a random mat is useful as a preform for a thin-walled shaped product, such as a skin of sandwich materials. The average number of fibers in the reinforcing fiber bundle (A) can be controlled by the cutting step and the opening step in a preferred manufacturing method to be described later.

The term of a sandwich material herein means a member obtained by layering three or more layers, representatively three layers, of a plurality of materials. An especially representative example of the sandwich material is one constituted by a center-layer material (core material) and a material (surface material) which is different from the core material and which has been layered to the front and back surfaces of the core material, like a sandwich as a food. In a broad sense, that term includes a layered body including four or more layers and a layered body in which the core material and the surface materials are made of the same material.

[Thermoplastic Resin]

The random mat of the invention may further contain a thermoplastic resin to be a preform for obtaining a fiber-reinforced composite material therefrom. It is preferable in the random mat that the thermoplastic resin be present in a form of fiber and/or particles. In the case where a thermoplastic resin in the form of fiber and/or particles is present as a mixture with reinforcing fibers, this random mat is characterized in that during molding, the thermoplastic resin can be easily impregnated, without the need of allowing the fibers and the resin to be fluidized within the mold. It is preferable that the thermoplastic resin is constituted by a fibrous or particulate from. Two or more kinds of thermoplastic resins may be used, and a fibrous one and a particulate one may be used in combination.

In the case of a fibrous thermoplastic resin, one having a tex of 100 to 5,000 dtex is preferred, and one having a tex of 1,000 to 2,000 dtex is more preferred. The average fiber length thereof is preferably 0.5 to 50 mm, more preferably 1 to 10 mm.

In the case of particulate thermoplastic resins, preferred examples include spherical shapes, small pieces, or cylindrical shapes such as a pellet. In the case of spherical shapes, preferred examples thereof include bodies of rotation of a complete circle or ellipse or shapes such as the shape of an egg. In the case of using spherical particles, the average particle diameter thereof is preferably 0.01 to 1,000 $\mu$m. The average particle diameter thereof is more preferably 0.1 to 900 $\mu$m, even more preferably 1 to 800 $\mu$m. There are no particular limitations on the particle diameter distribution thereof. A narrow distribution is more preferable from the standpoint of obtaining a thinner shaped product. However, it is possible to adjust a desired particle size distribution by an operation such as classification.

In the case of small pieces, preferred examples of the shape thereof include cylindrical shapes such as a pellet, prismatic shapes, and flaky shapes. In this case, the particles may have some degree of aspect ratio. However, the preferable length thereof is substantially the same as that of the fibrous resins.

Examples of the kinds of the thermoplastic resin include vinyl chloride resins, vinylidene chloride resins, vinyl acetate resins, polyvinyl alcohol resins, polystyrene resins, acrylonitrile/styrene resins (AS resins), acrylonitrile/butadiene/styrene resins (ABS resins), acrylic resins, methacrylic resins, polyethylene resins, polypropylene resins, polyamide-6 resins, polyamide-11 resins, polyamide-12 resins, polyamide-46 resins, polyamide-66 resins, polyamide-610 resins, polyacetal resins, polycarbonate resins, polyethylene terephthalate resins, polyethylene naphthalate resins, polybutylene terephthalate resins, polybutylene naphthalate resins, polyarylate resins, polyphenylene ether resins, polyphenylene sulfide resins, polysulfone resins, polyether sulfone resins, polyetheretherketone resins, and polylactic acid resins.

These thermoplastic resins may be used alone or in combination of two or more thereof.

It is preferable that the amount of the thermoplastic resin present in the random mat is 50 to 1,000 parts by mass per 100 parts by mass of the reinforcing fibers. The amount of the thermoplastic resin is more preferably 55 to 500 parts by mass per 100 parts by mass of the reinforcing fibers, and is even more preferably 60 to 300 parts by mass per 100 parts by mass of the reinforcing fibers.

[Other Agents]

The random mat of the invention may contain any of various fibrous or non-fibrous fillers such as a glass fiber and an organic fiber, and additives such as a flame retardant, a UV resistance agent, a pigment, a release agent, a softener, a plasticizer, and a surfactant, so long as these additives do not impair the objectives of the invention.

[Manufacturing method]

A preferred method for obtaining the random mat of the invention is described below. It is preferable that the random mat of the invention is formed through the following steps 1 to 3:

    1. Step for cutting a bundle of the reinforcing fibers;
    2. Step for introducing the cut reinforcing fibers into a pipe and opening the fiber bundles;
    3. Step for forming a random mat from the reinforcing fibers and a thermoplastic resin.

Namely, the present invention involves a manufacturing method for a random mat, the manufacturing method including steps 1 to 3 shown above.

Each step is described below in detail.

[Cutting Step]

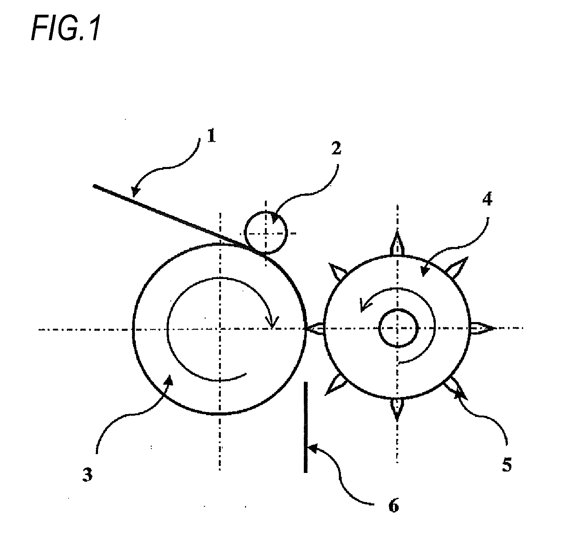

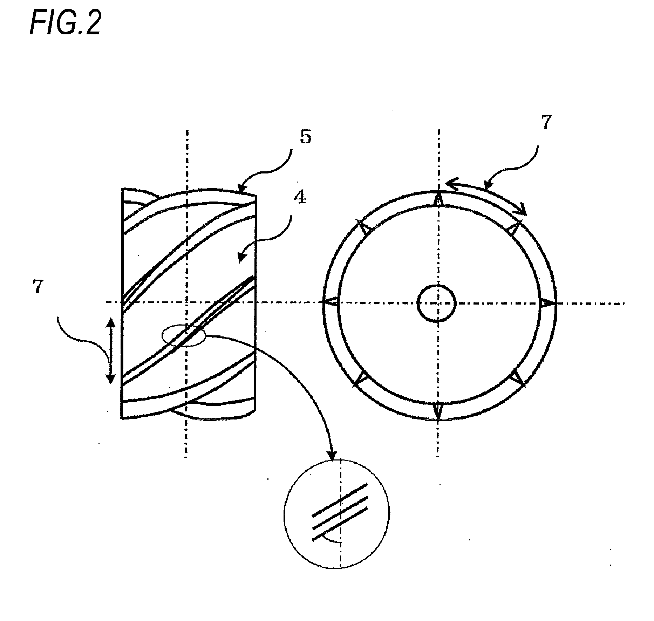

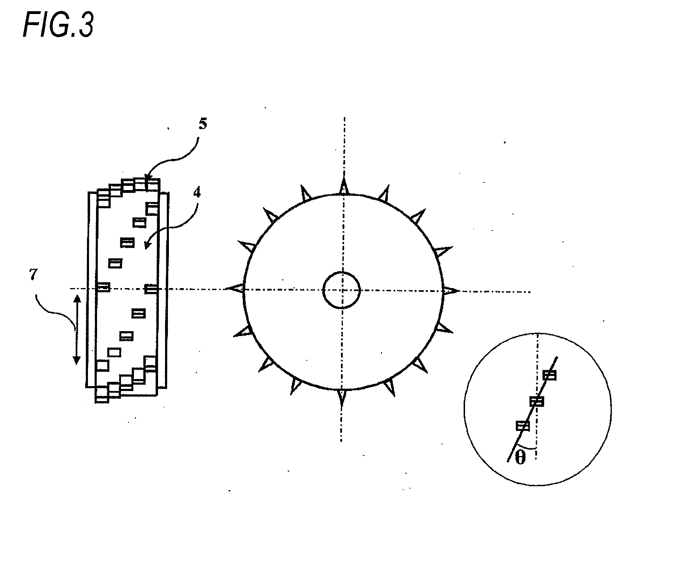

The method of cutting reinforcing fibers in the method of the invention specifically is a step of cutting the reinforcing fibers using knives. Preferred as the knives for the cutting is, for example, a rotary cutter. Preferred as the rotary cutter is one equipped with spiral knives arranged at a specific angle or with a so-called separating knife in which a large number of short blades are arranged. A schematic view which illustrates the cutting step is shown in Fig. 1. An example of the rotary cutter having spiral knives is shown in Fig. 2, and an example of the rotary cutter having a separating knife is shown in Fig. 3.

It is preferable that the average number of fibers (N) in the reinforcing fiber bundle (A) is controlled, so as to be within the preferred range in the invention, by adjusting the size such as a width of the bundle or the number of fibers per unit width of the fiber bundle to be subjected to the cutting step.

As the fiber bundle to be subjected to the cutting step, it is preferred to use one in which the number of bundles of the reinforcing fibers falls in advance within the range shown by expression (2). In general, however, the smaller the number of fiber bundles, the higher the cost of the fibers. Consequently, in the case of using an inexpensively available reinforcing fiber bundle in which the number of fiber bundles is large, it is preferable that the fiber bundle is subjected to the cutting step after a width thereof and the number of fibers per unit width are adjusted. Specific examples thereof include a method in which the fiber bundle is finely widened by opening or the like and is then subjected to the cutting step, and a method in which a slitting step is provided before the cutting step. In the method in which a slitting step is provided, since the fiber bundle is in advance thinned before being supplied to the cutting step, ordinary flat blades, spiral blades, or the like, having no special mechanism can be used as a cutter.

Examples thereof further include a method in which a separating knife are used to cut the fiber bundle and a method in which a cutter having a slitting function is used to cut and simultaneously slit the fiber bundle.

In the case of using the separating knife, a reduced average number of fibers (N) can be obtained by using a separating knife having a narrow knife width, while an increased average number of fibers (N) can be obtained by using a separating knife having a wide knife width.

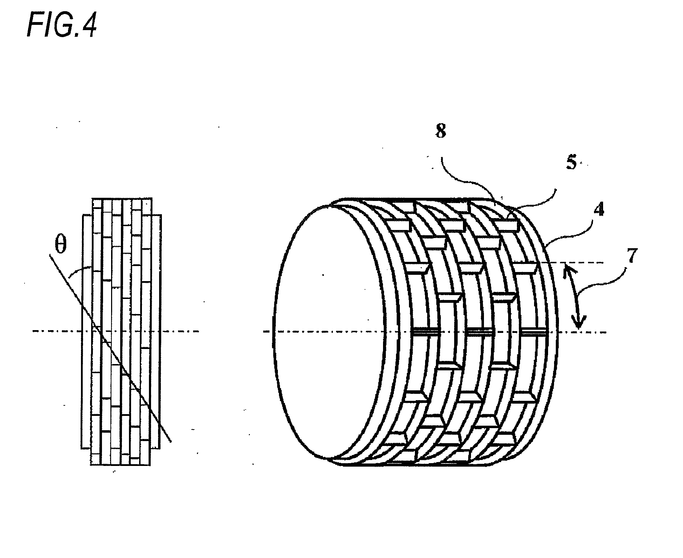

As a cutter having a slitting function, an example of separating cutters having both blades having a slitting function and arranged in parallel with the direction of the fibers, in addition to blades perpendicular to the direction of the fibers, is shown in Fig. 4. In the cutter of Fig. 4, short blades perpendicular to the direction of the fibers are spirally disposed at a certain interval. The fibers can be cut with these short blades, and simultaneously the bundle can be slit with the blades perpendicular to the direction of the fibers. In the separating cutter shown in Fig. 4, the angle $\theta$ between the circumferential direction of the rotary cutter and the arrangement direction of knives is constant as shown in the figure. Also in the case of a separating knife such as that shown in Fig. 2, blades parallel with the direction of the fibers may be disposed between separating knives.

In order to obtain a random mat for reinforcing a thermoplastic resin, the random mat having excellent surface appearance, unevenness in fiber density exerts considerable influences. In the case of using a rotary cutter in which ordinary flat blades are disposed, the fiber cutting is discontinuous and introduction of the cut fibers as they are into an application step results in unevenness in fiber areal weight. Consequently, by using knives regulated at a specific angle to continuously cut fibers without interrupting the supply of cut fibers, application with little unevenness in density becomes possible. A knife angle for continuously cutting the reinforcing fibers is geometrically calculated from a width of the reinforcing fibers to be used and a pitch of the blades, and it is preferable that the relationship meets the following expression (3). The pitch of blades along the circumferential direction is reflected as it is in the fiber length of the reinforcing fibers.

$$\text{Fiber length of reinforcing fibers (pitch of blades)} = \text{(width of reinforcing-fiber strand)} \times \tan(90-\theta) \qquad (3)$$

In the expression, $\theta$ is the angle between the circumferential direction and the arrangement direction of knives.

Fig. 2 to Fig. 4 show examples of knives arranged at such a specific angle, and the angle $\theta$ between the circumferential direction and the arrangement direction of knives disposition in each of these examples of cutters is shown in the figures.

Where a fiber length of the reinforcing fibers contained in a random mat is two or more kinds thereof, a plurality of the above-described cutting apparatus are prepared, and fibers cut with these cutting apparatuses can be mixed with the opening apparatus or the application apparatus to be described later. In this case, a degree of opening, a content of the reinforcing fiber bundle (A), and the average number of fibers (N) in the reinforcing fiber bundle (A) can be suitably controlled with the opening apparatus by a pressure of air and the like as described later. The opening apparatuses are disposed respectively for the plurality of cutting apparatuses, the pressure of air of the each opening apparatus is varied, and thereby suitable values of the content of the reinforcing fiber bundle (A) and the average number of fibers (N) in the reinforcing fiber bundle (A) can be obtained in each fiber length. There are no particular limitations on the average number of fibers (N) in the reinforcing fiber bundle (A) which is suitable for each fiber length. However, it is preferable that the reinforcing fibers (C) having a fiber length of 15 mm or more and 50 mm or less have a larger value of the average number of fibers in the reinforcing fiber bundle constituted by the reinforcing fibers of the critical number of single fiber or more than the value of the reinforcing fibers (B) having a fiber length of 3 mm or more and less than 15 mm, as shown by expression (2C). Namely, it is preferable that the average number of fibers ($N_C$) is larger than the average number of fibers ($N_B$). Since the reinforcing fibers (C) tend to have a larger aspect ratio than the reinforcing fibers (B), fiber bundles thereof tend to be more flexible and to be entangled, resulting in a possibility of impairing flowability.

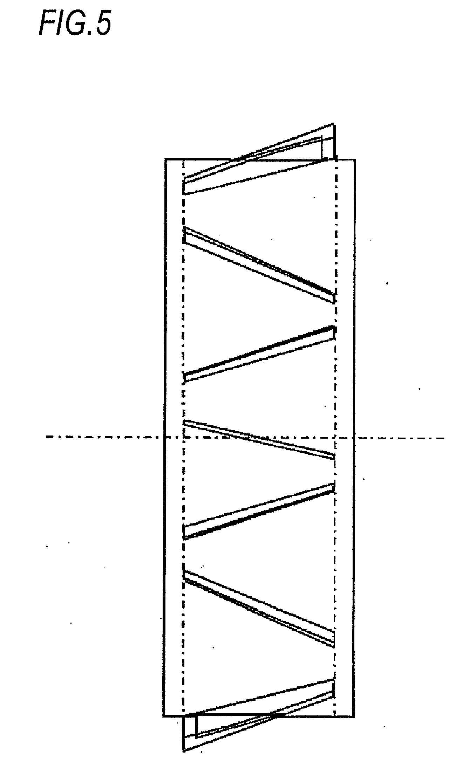

Furthermore, where a length of reinforcing fibers contained in a random mat has a relatively wide fiber length distribution, the fibers can be cut while continuously varying the fiber length, by using a rotary cutter in which the pitch of blades varies continuously, such as the cutter as shown in Fig. 5.

[Opening Step]

The opening step in the method of the invention is a step in which cut reinforcing fibers are introduced into a pipe and fiber bundles are opened. By blowing air against the fibers, the fiber bundles can be suitably opened. The degree of opening, the content of reinforcing fiber bundle (A), and the average number of fibers (N) in the reinforcing fiber bundle (A) can be suitably controlled by adjusting a pressure of air, or the like. In the opening step, the reinforcing fibers can be opened by directly blowing air against the fiber bundles preferably through compressed-air blowing holes at a wind velocity of 1 to 1,000 m/sec. The wind velocity is more preferably 5 to 500 m/sec, and is even more preferably more than 50 m/sec and 500 m/sec or less. Specifically, several holes having a diameter of about 1 to 2 mm are formed in the wall of the pipe through which the reinforcing fibers to be passed, and a pressure of 0.01 to 1.0 MPa, more preferably about 0.2 to 0.8 MPa, is applied from outside to thereby directly blow compressed air against the fiber bundles. By lowering the wind velocity, a larger amount of fiber bundles can remain. Conversely, by heightening the wind velocity, the fiber bundles can be opened to a state of single fiber.

[Step of forming Random Mat]

This step is a step in which the cut and opened reinforcing fibers are spread in air and, simultaneously therewith, a thermoplastic resin in a form of powder particles or short fibers (hereinafter, these are inclusively referred to as "thermoplastic resin particles or the like") is supplied. The reinforcing fibers are thus sprayed together with the thermoplastic resin particles or the like on a breathable support disposed under the opening apparatus, and the reinforcing fibers and the thermoplastic resin particles or the like are deposited, in a mixed state thereof, on the support in a specific thickness and are fixed thereto to form a random mat.
In this step, the reinforcing fibers opened with a gas and thermoplastic resin particles or the like supplied through another path are simultaneously sprayed toward a breathable support, deposited on the breathable support in a mat form in a state where these are substantially evenly mixed, and fixed in this state. In this case, where the breathable support is constituted by a conveyor made from a net and the deposition on the conveyor is performed while continuously moving the conveyor in one direction, a random mat can be continuously formed. Furthermore, a method in which the support is moved in the front-back direction and the leftward-rightward direction to thereby achieve even deposition may be used.
Here, it is preferable that the reinforcing fibers and the thermoplastic resin particles or the like is sprayed so as to be two-dimensionally oriented. In order to apply the opened fibers while forming two-dimensionally orientation, it is preferred to use a tapered pipe which becomes larger toward the downstream side, such as a cone-shaped pipe. In this tapered pipe, since gas blown against the reinforcing fibers is diffused to lower a flow rate within the pipe, rotating force is given to the reinforcing fibers at this time. By utilizing the Venturi effect, the opened reinforcing fibers can be evenly sprayed together with the thermoplastic resin particles or the like without causing unevenness. From the standpoint of the fixing step to be described later, it is preferable that the reinforcing fibers and the resin are sprayed on a movable breathable support (e.g., net conveyor) having a suction mechanism thereunder and deposited in a random mat form.
In this step, a supply rate of the thermoplastic resin particles or the like is preferably 50 to 1,000 parts by mass per 100 parts by mass of the reinforcing fibers. The amount of the thermoplastic resin particles or the like per 100 parts by mass of the reinforcing fibers is more preferably 55 to 500 parts by mass, even more preferably 60 to 300 parts by mass.
This random mat formation step includes a step for fixing the reinforcing fibers and the thermoplastic resin particles or the like. Namely, this fixing step is a step in which the deposited reinforcing fibers and thermoplastic-resin particles or the like are fixed. Preferably, the reinforcing fibers are fixed by suctioning air from a lower part of the breathable support. The thermoplastic resin sprayed simultaneously with the reinforcing fibers is also fixed while being mixed, by suction of air in the case where the resin is fibrous or accompanying the reinforcing fibers even in the case where the resin is particulate.
By thus suctioning air from a lower part of a deposition surface, a random mat having a high degree of two-dimensional orientation can be obtained. Furthermore, a negative pressure generated here can be used to suction the thermoplastic resin particles or the like, and the resin can be easily mixed with the reinforcing fibers by means of a diffusing flow generated in the pipe. In the random mat thus obtained, the thermoplastic resin particles or the like is evenly present in spaces and vicinity of the reinforcing fibers contained therein. As a result, in the steps of heating, impregnation, and pressing to be described later, a move distance of the resin becomes short, and the resin can be impregnated into the random mat in a relatively short time period.
Where the sheet, net, or the like which constitutes the breathable support has too small an opening size or where some of the thermoplastic resin particles or the like pass through the support and do not remain in the mat, a method for preventing this trouble can be used in which a nonwoven fabric or the like is set on a surface of the support and the reinforcing fibers and the thermoplastic resin particles or the like are blown against the nonwoven fabric and fixed thereto. In this case, when the nonwoven fabric is made from the same resin as the thermoplastic resin particles or the like, this nonwoven fabric need not be peeled off from the deposited mat and can be heated and pressed in the next step to utilize the nonwoven fabric as a part of the thermoplastic resin to be a matrix of the composite material.
In the method of the invention, a random mat can be formed by cutting a reinforcing fiber strand into a given length, thereafter supplying the resultant strand pieces and reinforcing fibers separated into a single fiber during the cutting, to a transport path for suction conveying, blowing a gas against the reinforcing fibers from a gas-blowing nozzle provided middle in the transport path or at the discharge end thereof, thereby separating and opening the cut strand pieces into reinforcing fiber bundles of a desired size (thickness), and simultaneously blowing the reinforcing fibers together with thermoplastic resin particles or the like against a surface of a breathable support (hereinafter sometimes referred to as "fixing net") which moves continuously or intermittently in a certain direction to deposit and fix the reinforcing fibers and the resin. It is preferable that the transport path is constituted by a flexible tube, such as a flexible tube or a hose, and a tapered pipe consecutively provided at the end thereof. In this case, the gas-blowing nozzle may be disposed at a joint between the plastic tube and the tapered pipe. It is preferable in this case that a supply path for the thermoplastic resin particles or the like is disposed in the inner wall of the tapered pipe.

[Fiber-Reinforced Composite Material]

In the invention, the term fiber-reinforced composite material, in a wide sense, means a material in which a resin reinforced with reinforcing fibers. In a narrow sense, however, that term means an intermediate for molding (base material to be molded), such as a prepreg, which is constituted by that material. The fiber-reinforced composite material in the narrow sense according to the invention is described below.

By heating and pressing the random mat of the invention as a preform, a fiber-reinforced composite material constituted by reinforcing fibers and a thermoplastic resin can be obtained. With respect to a method for the heating and pressing, the heating and the pressing may be separately conducted. It is, however, preferred to mold the random mat by a method such as press molding and/or thermoforming. In this case, the fiber-reinforced composite material of the invention can be called a plate shaped product. Since the random mat of the invention has a feature wherein the thermoplastic resin can be easily impregnated, a fiber-reinforced composite material can be effectively obtained therefrom by a method such as a hot-press molding. Specifically, it is preferable that the thermoplastic resin in the random mat is melted under pressure and impregnated into the reinforcing-fiber bundles and into spaces of the single reinforcing fibers, and the obtained one is cooled and then heated and pressed. It is preferred to conduct this heating and pressing operation in a mold.

With respect to pressing conditions for obtaining a fiber-reinforced composite material, the pressure is preferably less than 10 MPa, more preferably 8 MPa or less, even more preferably 5 MPa or less. In the case where the pressing pressure is less than 10 MPa, a more inexpensive or general molding apparatus can be used and equipment investment and maintenance cost can be reduced even in the case of manufacturing large shaped products. Such pressing pressures are hence preferred.

A temperature to which the random mat of the invention is heated in order to convert the random mat to a fiber-reinforced composite material is as follows. It is preferable that the temperature is the melting point of the thermoplastic resin contained in the random mat or more and the decomposition temperature thereof or less when the resin is crystalline, and is the glass transition temperature of the resin or more and the decomposition temperature thereof or less when the resin is amorphous. It is more preferable that the temperature should be the melting point of the thermoplastic resin or higher but lower than the decomposition temperature thereof when the thermoplastic resin is crystalline, and be the glass transition temperature thereof or higher but lower than the decomposition temperature thereof when the thermoplastic resin is amorphous. Meanwhile, the decomposition temperature of a thermoplastic resin, in the invention, preferably means the heat decomposition temperature measured in air.

Thus, a fiber-reinforced composite material which is, for example, plate (shaped plate) can be efficiently obtained in a short time period. The plate fiber-reinforced composite material is useful as a prepreg for three-dimensional molding, in particular, as a prepreg for press molding. A specific procedure is as follows. The plate fiber-reinforced composite material is heated to a temperature of the melting point or more of the thermoplastic resin contained therein when the resin is crystalline or a temperature of the glass transition temperature or more of the thermoplastic resin when the resin is amorphous. One sheet of this heated composite material or a stack of multiple sheets thereof, in accordance with the shape of the shaped product to be obtained, is put into a mold kept at a temperature which is lower than the melting point of the thermoplastic resin when the resin is crystalline or which is lower than the glass transition temperature of the thermoplastic resin when the resin is amorphous. Subsequently, the fiber-reinforced composite material is pressed and then cooled. Thus, a shaped product can be obtained by a so-called cold pressing.

Alternatively, the plate fiber-reinforced composite material is put into a mold , and press molding is conducted while heating the fiber-reinforced composite material to a temperature of the melting point or more of the thermoplastic resin contained therein when the resin is crystalline or a temperature of the glass transition temperature or more of the thermoplastic resin when the resin is amorphous. Subsequently, the mold is cooled to a temperature of less than the melting point of the thermoplastic resin when the resin is crystalline or a temperature of less than the glass transition temperature of the thermoplastic resin when the resin is amorphous. Thus, a shaped product can be obtained by a so-called hot pressing.

Namely, the present invention includes both a fiber-reinforced composite material obtained from the random mat and a shaped product obtained by molding the fiber-reinforced composite material. As mentioned above, the random mat of the invention has a feature wherein since the reinforcing fibers and the thermoplastic resin are mixed with each other and are present close to each other, there is no need of allowing the fibers and the resin to fluidize in the mold and the thermoplastic resin can be easily impregnated. Also in the fiber-reinforced composite material obtained from the random mat of the invention and in the shaped product obtained by molding the fiber-reinforced composite material, a state of the reinforcing fibers in the random mat, i.e., the isotropy, can be maintained.

Namely, the present invention provides a composite material characterized by including reinforcing fibers and a thermoplastic resin, wherein the reinforcing fibers include reinforcing fibers having an average fiber length of 3 mm or more and less than 15 mm in an amount of 50 to 100% by mass based on all the mat fibers and reinforcing fibers having an average fiber length of 15 mm or more and 50 mm or less in an amount of 0 to 50% by mass based on all the mat fibers, and wherein the reinforcing fibers have been substantially two-dimensionally randomly oriented, and with respect to a reinforcing fiber bundles (A) constituted by the reinforcing fibers of the critical number of single fiber or more, the critical number being defined by the following expression (1), a ratio of the reinforcing fiber bundle (A) to all the fibers is 50 vol% or more and less than 99 vol% and an average number of fibers (N) in the reinforcing fiber bundle (A) satisfies the following expression (2).

$$\text{Critical number of single fiber} = 600/D \qquad (1)$$

$$1.5\times10^{4}/D^{2} < N < 3\times10^{5}/D^{2} \qquad (2)$$

(In the expressions, D is the average fiber diameter ($\mu$m) of single reinforcing fibers.)

Usually, where a shaped product is constituted by a thermoplastic resin alone, it is possible to form a rib, a boss, and the like so as to be thinner and higher since a melt viscosity thereof is decreased by heightening the melt temperature during molding or flowing of the resin into narrow passes, i.e., a shear flow. In addition, when a resin alone flows, it is possible to form the resin into a complicated shape and to impart a higher reinforcing effect to a shaped product with a smaller resin amount by maximizing the effect of bosses or ribs while reducing a thickness of the entire of the whole shaped product. However, in the case of a shaped product constituted by a composite material, fibers as a reinforcing material tend to impair the flowability. Especially in a fiber-reinforced composite material, since the reinforcing fibers have a high aspect ratio, the materials tend to have considerably reduced flowability. Although reducing the length of the reinforcing fibers to lower the aspect ratio enhances the flowability of the material, the resultant shaped product as a whole has reduced mechanical properties. Hitherto, in the case of composite materials having high flowability, there has been a high tendency that fibers as a reinforcing material are aligned in the flow direction and also a tendency that the shaped product has insufficient strength in the direction perpendicular to the flow direction of the material, even though highly strong in the flow direction, and thus shows anisotropy in mechanical property. Because of these, for enabling a shaped product of a carbon-fiber composite material to have isotropic mechanical properties, it has been necessary that the shaped product is thick-walled so as to eliminate the necessity of reinforcing parts such as a rib or a boss. Furthermore, with respect to upright portions such as a rib and a boss, it has been difficult to allow the material to flow over a long distance in the height direction when the upright portions are formed. In contrast, in the case of obtaining a shaped product from the random mat of the invention, upright portions such as a rib and a boss can be more easily formed because the random mat, which highly flows isotropically, is used as a constituent material. In addition, more complicated shapes can be formed more thinly, and upright portions can be formed more highly. Consequently, the effect of reinforcing the whole shaped product can be imparted with a small material amount.

[Upright Portions]

As mentioned above, a shaped product having upright portions can be advantageously provided in accordance with the invention. The term "upright portions" means portions which extend longitudinally from the horizontal portion described above, and examples thereof include the sidewalls, ribs, bosses, mounts, and hinges of a housing or a panel-shaped member. Although the height of the upright portions is not particularly limited, the height thereof is preferably 1 to 300 mm, more preferably 5 to 100 mm. The height of the upright portions need not be even, and can be increased or reduced locally. The range over which the height of the upright portions can be increased or reduced is not particularly limited, and is preferably 10 to 90%, more preferably 20 to 80%, of the maximum height. The thickness of the upright portions is not particularly limited, and may be the same as or different from that of the horizontal portion. Since the upright portions are frequently required to have a more complicated shape as compared with the horizontal portion, the thickness of the upright portions is preferably 0.2 to 100 mm, more preferably 1 or 50 mm. The thickness of the upright portions need not be even, and can be increased or reduced locally. In this case, the range over which the thickness thereof can be increased or reduced is not particularly limited. However, that range is preferably 20 to 500%, more preferably 50 to 200%, of the thickness of the base upright portion. The thickness thereof can be changed stepwise, or can be continuously changed by giving a taper or a curvature. However, it is preferred to continuously change the thickness thereof, from the standpoint of avoiding stress concentration.

The upright portions extend from the horizontal portion of the shaped product in a longitudinal direction at an arbitrary angle. The angle at which the upright portions extend from the horizontal portion is preferably 30 to 90 degrees, more preferably 40 to 85 degrees. In the case where the angle is less than 30 degree, materials are required in a larger amount although it is advantageous for releasing from a mold. Furthermore, a desired arbitrary chamfer or curvature can be imparted to the upright portions without departing from the spirit of the invention. The dimensions of the chamfer or curvature are not particularly limited. However, it is preferable that the value of C in the case of the chamfer is 0.2 to 10 mm and the value of R in the case of the curvature is 0.2 to 10 mm. It is also preferable that an angle for ensuring a mold draft is provided to the upright portions without departing from the spirit of the invention. The mold draft angle is preferably 1 to 45 degrees, more preferably 5 to 10 degrees. The upright portions may have partial unevenness or beads. In this case, however, it is necessary to take notice of ensuring a mold draft angle.

The term rib means a protruding reinforcing portion in a shaped product such as a brim, a sidewall, and the like, of a housing for electronic/electrical appliances, which is provided for the purpose of enhancing strength or rigidity of the shaped product without increasing a wall thickness thereof or for the purpose of preventing or reducing deformations, such as warpage and torsion, of a shaped product having a large flat surface. Meanwhile, the term boss means a protruding portion disposed when the height of a part of a shaped product is desired to be increased, for the purpose of reinforcing the surrounding of a hole formed in the shaped product, the purpose of ensuring an insertion allowance required when this shaped product is combined with another shaped product or a component or improving the rickety state of the shaped product. The embodiments specifically shown in the Examples of the invention are shaped products having a rib and/or a boss as an upright portion, but the invention should not be limited thereto.

In the case where the upright portion is ribs, the shape, length, and height of the ribs are not particularly limited and can be suitably set in accordance with purposes. For example, in the case of reinforcing the brim or sidewalls of a shaped product, a rib having the shape of a rectangle, triangle, or the like, may be disposed on each portion to be reinforced, so that the rib has a length and height of several millimeters to several hundred millimeters. The height thereof is usually preferably 1 to 300 mm, more preferably 5 to 100 mm. Too small heights may result in cases where it is difficult to obtain a reinforcing effect. In the case of preventing a shaped product from generating warpage or torsion, a continuous rib extending from one end to the other end of the shaped product may be disposed. In this case, the height thereof may be constant or may be increased or reduced somewhere in the rib. The range over which the height thereof can be increased or reduced is preferably 10 to 90%, more preferably 20 to 80%, of the maximum height. The thickness of the ribs is not particularly limited, and may be the same as or different from that of the horizontal portion. Since the ribs have a more complicated shape than the horizontal portion, the thickness thereof is preferably 0.2 to 100 mm, more preferably 1 to 50 mm. Thicknesses thereof less than 0.2 mm may result in cases where a sufficient reinforcing effect is not developed. Conversely, thicknesses thereof larger than 50 mm are undesirable from the standpoints of profitability and weight reduction. The thickness of the ribs need not be even, and can be increased or reduced locally. In this case, the range over which the thickness thereof can be increased or reduced is not particularly limited. However, that range is preferably 20 to 500%, more preferably 50 to 200%, of the thickness of the base. The thickness thereof can be changed stepwise, or can be continuously changed by giving a taper or a curvature. However, it is preferred to continuously change the thickness thereof, from the standpoint of avoiding stress concentration under loads. The shape, length, height, and thickness of the ribs each affect reinforcement of the shaped product and prevention of deformations thereof. The larger, longer, higher, and thicker ribs are, the higher the reinforcing effect thereof becomes. However, in such a case, formation of such ribs necessitates a larger material amount and is therefore disadvantageous from the standpoints of profitability and weight reduction. Consequently, the shape and size of each rib are set so as to be well balanced in accordance with the required levels of reinforcement and deformation prevention. The ribs may have through holes for ventilation, or the like. Such holes may be formed with a shearing machine or the like in the mold during the molding, or may be formed in post-processing by drilling, punching, cutting, or the like.

In the case where the upright portion is bosses, the shape of the bosses is not particularly limited and may be any shape such as a prism or a cylinder. However, cylinders are more preferred from the standpoint of reinforcing effect. The height thereof, although depending on the size of the shaped product, is preferably 0.1 to 300 mm, more preferably 0.2 to 100 mm. In the case where the height thereof is less than 0.1 mm, a reinforcing effect is difficult to be obtained. In the case where the height thereof exceeds 300 mm, a large amount of the material is required and this is disadvantageous from the standpoints of profitability and weight reduction. The thickness thereof is suitably set in accordance with the desired level of reinforcement, and may be the same as or different from that of the horizontal portion. Since the bosses have a more complicated shape than the horizontal portion, the thickness thereof is preferably 0.5 to 100 mm, more preferably 1 to 50 mm where the bosses are disposed as a solid boss, for example, for the purpose of improving the rickety state of the shaped product. When reinforcing holes into which screws or shafts are to be inserted, a hollow boss is disposed and the wall thickness thereof in this case is preferably 0.2 to 50 mm, more preferably 1 to 20 mm. Too small thicknesses in the case of a solid boss or too small wall thicknesses in the case of a hollow boss may result in cases where a reinforcing effect is difficult to be obtained. In the case where the thickness or wall thickness thereof is too large, a larger amount of the material is required and this is disadvantageous from the standpoints of profitability and weight reduction. The thickness or wall thickness of the bosses need not be even, and can be increased or reduced locally. In this case, the range over which the thickness or wall thickness thereof can be increased or reduced is not particularly limited. However, the difference between the thickest portion and the thinnest portion is preferably within 5 times, more preferably within 2 times. The thickness thereof can be changed stepwise, or can be continuously changed by giving a taper or a curvature. However, it is preferred to continuously change the thickness thereof, from the standpoint of avoiding stress concentration under load. The bosses may be ones in which a metallic component such as a nut sert has been incorporated inside by insert molding.

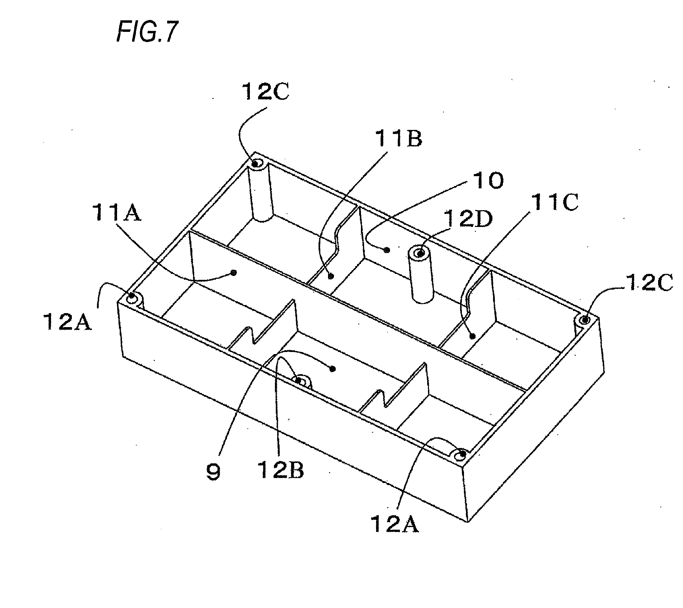

Preferred examples of the shaped product of the invention are one having a plurality of bosses and a plurality of ribs as exemplified in Fig. 7, since many of these are suitable for practical use. More preferred is a box-shaped object substantially of a rectangular parallelepiped shape, the box-shaped object having a boss at each of at least the four corners and having a rib parts arranged so as to partition the inside of the box-shaped object into two or more sections.

[Methods for Manufacturing Shaped Product]

A manufacturing method for a shaped product using the random mat of the invention is not particularly limited, and examples thereof include the following methods.

Namely, they are a method in which the following steps A-1) to A-3) are included to conduct impregnation to molding or a step in which steps B-1) to B-4) are included to conduct impregnated to molding.

A-1) Step in which the random mat is heated to a temperature of the melting point of thermoplastic resin or more and the decomposition temperature thereof or less when the resin is crystalline or a temperature of the glass transition temperature of the resin or more and the decomposition temperature thereof or less when the resin is amorphous, and the heated random mat is pressed to impregnate the thermoplastic resin into reinforcing fiber bundles, and thereby a prepreg as a fiber-reinforced composite material is obtained.

A-2) Step in which the prepreg obtained in A-1) is arranged in a mold adjusted at a temperature of the melting point of the resin or less when the resin is crystalline or a temperature of the glass transition temperature of the resin or less when the resin is amorphous, so that a charge ratio represented by the following expression (4) is 5 to 100%, and the prepreg is pressed.

A-3) Step in which the temperature of the mold is adjusted at a temperature of the melting point of the thermoplastic resin or less when the resin is crystalline or a temperature of the glass transition temperature of the resin or less when the resin is amorphous to complete the molding.

B-1) Step in which the random mat is arranged in a mold so that a charge ratio represented by the following expression (3) is 5 to 100%.

B-2) Step in which the random mat is pressed while heating the mold to a temperature of the melting point of the thermoplastic resin or more and the heat decomposition temperature thereof or less when the thermoplastic resin is crystalline or a temperature of the glass transition temperature of the thermoplastic resin or more and the heat decomposition temperature thereof or less when the resin is amorphous (first pressing step).

B-3) Step in which the random mat is pressed in one or more stages so that the pressure in the final stage is 1.2 to 100 times the pressure in the first pressing step (second pressing step).

B-4) Step in which the temperature of the mold is adjusted at a temperature of the melting point of the thermoplastic resin or less when the resin is crystalline or a temperature of the glass transition temperature of the resin or less when the resin is amorphous to complete the molding. Thus, a shaped product can be advantageously produced.

The method which includes steps A-1) to A-3) to conduct impregnation to molding is a so-called cold pressing method. The method which includes steps B-1) to B-4) to conduct impregnation to molding is a so-called hot pressing method. Although steps A-2) and B-3) are steps in which a pressure is applied to a base material, such as a prepreg or random mat, to obtain a desired shaped product, the molding pressure is not particularly limited. However, the molding pressure applied per mold -cavity projected area is preferably less than 10 MPa, more preferably 8 MPa or less, even more preferably 5 MPa or less. Molding pressures of 10 MPa or more are undesirable because a large investment in equipment and a high maintenance cost are required especially for manufacturing a large shaped product. Although both of the two press molding methods are applicable to the shaped product of the invention, the cold pressing method is more preferred from the standpoint of the ability to further reduce the molding time.

Here, the charge ratio is the value defined by the following expression (4).

$$\text{Charge ratio} = 100 \times (\text{area of base material } (mm^2))/(\text{mold-cavity projected area } (mm^2))$$

(4)

(Here, the area of base material is a projected area in a draft direction of all the random mat or prepreg arranged, and the mold -cavity projected area is a projected area in the draft direction.)

In the invention, the charge ratio is not particularly limited. However, in the case where the molding is performed in a relatively low charge ratio, a base material is apt to be filled into a complicated shape. Specifically, the charge ratio thereof is preferably 5 to 100%, more preferably 20 to 95%. The charge ratio of the base material is even more preferably 50 to 90%. In the case where the charge ratio of the base material is less than 5%, there is a possibility that the base material cools down when the base material is fluidized during the molding, making it impossible to obtain a shaped product having a desired thickness. Conversely, in the case where the charge ratio of the base material exceeds 100%, the feature of the invention wherein molding is performed by fluidizing a base material to some degree is not exhibited. In addition, the charge ratio of the base material, exceeding 100%, is disadvantageous from the standpoints of production efficiency and cost because a post-processing such as trimming becomes necessary, in addition to increasing the loss of the base material.

Examples

Examples are shown below, but the invention should not be construed as being limited to the following Examples. The carbon fibers used in the Examples are PAN-based carbon fibers.

The thermoplastic resins used in the Examples and Comparative Examples are shown below.

Polycarbonate (glass transition temperature, 150°C; heat decomposition temperature (in air), 350°C)
· Polyamide-66 (melting point, 265°C; heat decomposition temperature (in air), 300°C)
· Polyamide-6 (melting point, 225°C; heat decomposition temperature (in air), 300°C)

1) Analysis of Reinforcing-Fiber Bundles in Random Mat

A random mat is cut into a size of about 100 mm x 100 mm. All the fiber bundles are taken out of the cut random mat with a tweezers, and the number (I) of the reinforcing fiber bundle (A) and the length (Li) and mass (Wi) of each fiber bundle are measured and recorded. The fiber bundles which are too small to take out with the tweezers are lastly put together and subjected to measurement of the mass (Wk). For the mass measurements, a balance capable of measurement down to 1/100 mg is used. The critical number of single fiber is calculated from the fiber diameter (D) of the reinforcing fibers used in the random mat, and the reinforcing fibers are divided into the reinforcing fiber bundle (A) constituted by the reinforcing fibers of the critical number of single fibers or more, and the other reinforcing fibers. Where two or more kinds of reinforcing fibers are used, the fibers are sorted by kinds, and the measurement and evaluation are made for each kind.

The average number of fibers (N) in the reinforcing fiber bundle (A) is determined in the following manner.

The number of fibers (Ni) in each reinforcing fiber bundle is determined by the following expression from the tex (F) of the reinforcing fibers used.

$$Ni = Wi/(Li \times F)$$

The average number of fibers (N) in the reinforcing fiber bundles (A) can be determined from the number (I) of the reinforcing-fiber bundles (A) using the following expression.

$$N = \sum Ni/I$$

The ratio (VR) of the reinforcing fiber bundle (A) to all the fibers in the mat can be determined from using the following expression by using the density (ρ) of the reinforcing fibers.

$$VR = \sum(Wi/\rho) \times 100/((Wk + \sum Wi)/\rho)$$

2) Analysis for Average Fiber Length of Reinforcing Fibers contained in Random Mat or Fiber-reinforced Composite Material (Shaped Plate)

The lengths of 100 reinforcing fibers randomly extracted from a random mat or a fiber-reinforced composite material were measured with a vernier caliper and a loupe down to 1 mm order and recorded. From the lengths (Li) of all the reinforcing fibers measured, the average fiber length (La) was determined using the following expression. In the case of the composite material, this composite material was heated in an oven at 500°C for about 1 hour to remove the resin, and reinforcing fibers were thereafter extracted therefrom.

$$La = \sum Li/100$$

3) Analysis of Reinforcing-Fiber Bundles in Fiber-reinforced Composite Material (Shaped Plate)

A fiber-reinforced composite material (shaped plate) obtained by hot-pressing a random mat is heated in an oven at 500°C for about 1 hour to remove the resin, and then examined by the same method as for random mats described above.

4) Analysis for Fiber Volume Fraction of Shaped Product having Bosses and Ribs

The shaped product was heated in an oven at 500°C for 1 hour to burn off the resin, and the mass of the specimen was measured before and after the treatment to thereby calculate the mass of the fiber component and that of the resin component. Subsequently, the fiber volume fraction was calculated using the specific gravity of each component.

5) Evaluation of Filling Property of Bosses and Ribs

The appearance of a shaped product, in particular, the ends of the ribs and bosses, was visually evaluated for the purpose of evaluating the flowability and moldability of the random mat and the composite material.

In the evaluation, a fiber-reinforced composite material (shaped plate) obtained by hot-pressing a random mat, the fiber-reinforced composite material heated under a desired condition, was arranged on a horizontal portion in a mold set at 120°C and shown in Fig. 5 so as to result in a charge ratio of 80%, and was cold-pressed at a desired pressure for 60 seconds.

The case where the material was filled into the ribs and bosses up to the ends thereof and no defects were observed in the shaped product is indicated by +; the case where defects were slightly observed is indicated by ±; and the case where filling was insufficient and obvious defects were observed in the shaped product is indicated by -.

6) Analysis for Fiber Orientation in Shaped Product having Bosses and Ribs

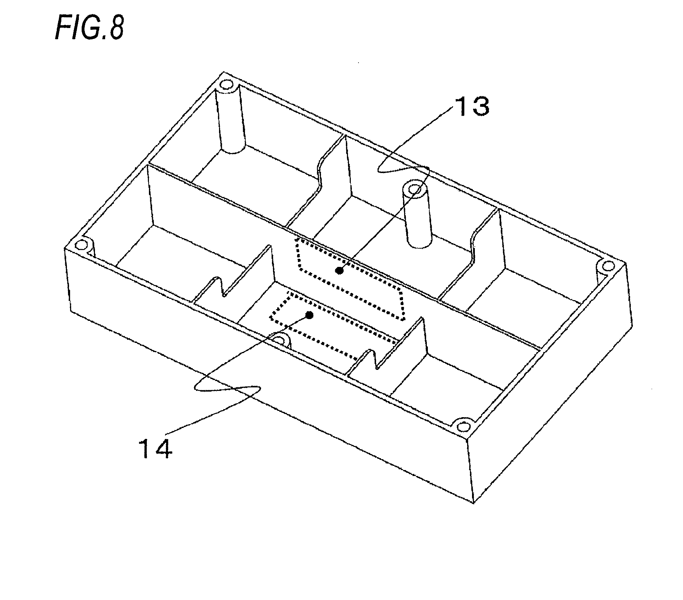

For the purpose of evaluating fiber orientation in rib parts, strip test pieces were cut out of the horizontal portion and rib parts of a shaped product having bosses and ribs as shown in Fig. 8, and were subjected to a tensile test to measure tensile modulus. The ratio ($E\delta$) obtained by dividing the larger value of the measured tensile moduli by the smaller value thereof was determined. The closer the ratio of the moduli is 1, the better the isotropy of the material has. In the Examples, the case where the ratio of moduli is 1.3 or less is rated as isotropic.

[Example 1]

As a reinforcing fiber, carbon fibers obtained by widening carbon fibers "Tenax" (registered trademark) STS40-24KS (average fiber diameter, 7 $\mu$m; fiber width, 10 mm), manufactured by Toho Tenax Co., Ltd., to a fiber width of 20 mm were used. As a cutting apparatus, a rotary cutter in which spiral knives of a cemented carbide arranged on a surface was used. In this operation, the value of $\theta$ in the following expression (3):

Fiber length of reinforcing fibers (pitch of blades) = (width of reinforcing fiber strand)×tan(90-$\theta$)       (3)

(wherein θ is the angle between the circumferential direction and each knife) was 68 degrees, and the pitch of the blades was 8 mm so that the reinforcing fibers were cut into a fiber length of 8 mm. As an opening apparatus, a double pipe was prepared by welding nipples made of SUS304 and differing in diameter. Small holes were formed in the inner pipe, and compressed air was supplied with a compressor into the space between the inner pipe and the outer pipe. In this stage, a wind velocity of the air discharged through the small holes was 150 m/sec. This pipe was disposed just under the rotary cutter, and a tapered pipe was welded to the lower part thereof. A matrix resin was supplied through the sidewall of the tapered pipe. As a matrix resin, particles obtained by freeze-pulverizing polycarbonate pellets "Panlite" (registered trademark) L-1225L, manufactured by Teijin Chemicals Ltd., and classifying the particles with 20-mesh and 100-mesh sieves. The polycarbonate powder had an average particle diameter of about 710 μm. Subsequently, a table movable in X-Y directions was disposed under the outlet of the tapered pipe, and suction was conducted from a lower part of the table with a blower. The supply rate of the reinforcing fibers and that of the matrix resin were set at 180 g/min and 480 g/min, respectively, and the apparatus was operated. Thus, a random mat was obtained in which the reinforcing fibers were mixed with the thermoplastic resin (polycarbonate powder). The reinforcing fibers of the random mat obtained had an average fiber length of 8 mm, and the fiber areal weight of the reinforcing fibers was 200 g/m$^2$.

The random mat obtained was examined for the ratio of the reinforcing fiber bundle (A) and the average number of fibers (N) thereof. As a result, the critical number of single fiber defined by expression (1) was 86, the ratio of the reinforcing fiber bundle (A) to all the mat fibers was 61%, the average number of fibers ($N_B$) in bundles of the reinforcing fibers (B) was 1,500, and the average number of fibers (N) in the reinforcing fiber bundle (A) was 1,500. The surfaces of the random mat obtained were observed and, as a result, the reinforcing fibers were not aligned in a specific direction in the plane and were randomly dispersed. Furthermore, the polycarbonate powder was dispersed in the reinforcing fibers without causing considerable unevenness.

Eight sheets of the random mat obtained were stacked and heated, at 4 MPa for 3 minutes, with a pressing apparatus heated at 300°C to obtain a fiber-reinforced composite material (shaped plate) having a thickness of 4.8 mm. The shaped plate obtained was subjected to an ultrasonic flaw detection test. As a result, neither unimpregnated portions nor voids were observed.

The shaped plate obtained was examined for tensile modulus along 0-degree and 90-degree directions. As a result, the ratio of moduli (Eδ) was found to be 1.03 and substantially no fiber alignment was observed. Thus, a material retaining isotropy was able to be obtained. Furthermore, this shaped plate was heated in an oven at 500°C for about 1 hour to remove the resin, and then examined for the ratio of the reinforcing fiber bundle (A) and the average number of fibers (N) thereof. As a result, there was no difference between the results thereof and the results of the examination of the random mat.

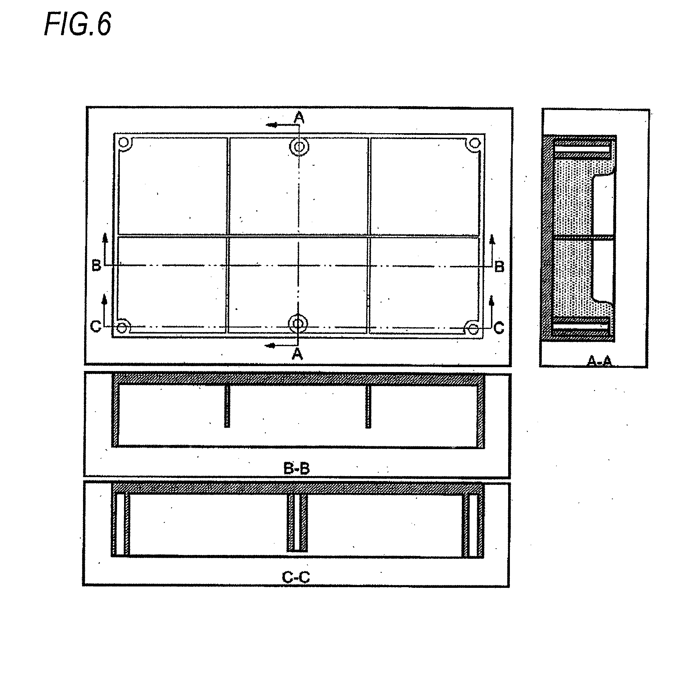

Furthermore, the shaped plate obtained was heated at 300°C using an IR oven manufactured by NGK Kiln Tech, arranged on the horizontal portion of the mold shown in Fig. 6 set at 120°C so as to result in a charge ratio of 80%, and cold-pressed for 60 seconds at a pressure of 5 MPa. Thus, a shaped product having bosses and ribs as shown in Fig. 7 was obtained. Portions thereof had the following dimensions:

the horizontal portion (9) had a length of 400 mm, a width of 200 mm, and a thickness of 2 mm,
a sidewall (10) had a height of 50 mm and a thickness of 2 mm,
rib 1 (11A) had a height of 50 mm and a thickness of 2 mm,
rib 2 (11B) had heights of 30 to 50 mm and a thickness of 2 mm,
rib 3 (11 C) had heights of 30 to 50 mm and a thickness of 1 mm,
boss 1 (12A) had a height of 50 mm, a hollow diameter of 5 mm, and a wall thickness of 2 mm,
boss 2 (12B) had a height of 40 mm, a hollow diameter of 5 mm, and a wall thickness of 2 mm,
boss 3 (12C) had a height of 50 mm, a hollow diameter of 5 mm, and a wall thickness of 1 mm, and
boss 4 (12D) had a height of 40 mm, a hollow diameter of 5 mm, and a wall thickness of 1 mm.

With respect to the shaped product obtained, strip test pieces were cut out of the horizontal portion and a rib part as shown in Fig. 8 and were subjected to a tensile test. The results of the evaluation are shown in Table 1.

[Example 2]

As a reinforcing fibers, Carbon fibers "Tenax" (registered trademark) IMS60-12K (average fiber diameter, 5 μm; fiber width, 6 mm), manufactured by Toho Tenax Co., Ltd., were used. As a cutting apparatus, the same rotary cutter as in Example 1, which had a blade pitch of 8 mm, was used. For the purpose of obtaining smaller fiber bundles, blades parallel with the direction of the fibers were provided to the rotary cutter at intervals of 0.8 mm. The same opening apparatus as in Example 1 was used, and the velocity of the wind discharged through the small holes was set to 100 m/sec. This pipe was disposed just under the rotary cutter, and a tapered pipe was welded to a lower part thereof. A matrix resin was supplied through the sidewall of the tapered pipe. As the matrix resin, PA66 fibers (T5 Nylon, manufactured by Asahi Kasei Fibers; tex, 1,400 dtex) dry-cut to 2 mm were used. Subsequently, the same table movable in X-Y directions as in Example 1 was disposed under the outlet of the tapered pipe, and suction was conducted from a lower part of the table with a blower. The supply rate of the reinforcing fibers and that of the matrix resin were set at 270 g/min and 550 g/min, respectively, and the apparatus was operated. Thus, a random mat was obtained in which the reinforcing fibers were mixed with the polyamide (PA66 fibers). The fiber areal weight of the reinforcing fibers was 300 g/m$^2$.

The random mat obtained was examined for the ratio of the reinforcing fiber bundle (A) and the average number of fibers (N) thereof. As a result, the critical number of single fiber defined by expression (1) was 120, the ratio of the reinforcing fiber bundle (A) to all the mat fibers was 93%, the average number of fibers ($N_B$) in bundles of the reinforcing fibers (B) was 1,900, and the average number of fibers (N) in the reinforcing fiber bundle (A) was 1,900. The nylon fibers (PA66 fibers) were dispersed in the reinforcing fibers without causing considerable unevenness.

Eight sheets of the random mat obtained were stacked and heated, at 4.0 MPa for 3 minutes, with a pressing apparatus heated at 280°C to obtain a fiber-reinforced composite material (shaped plate) having a thickness of 5.9 mm. The shaped plate obtained was subjected to an ultrasonic flaw detection test. As a result, neither unimpregnated portions nor voids were observed. The shaped plate obtained was examined for tensile modulus along 0-degree and 90-degree directions. As a result, the ratio of moduli (Eδ) was found to be 1.07 and substantially no fiber alignment was observed. Thus, a material retaining isotropy was able to be obtained. Furthermore, this shaped plate was heated in an oven at 500°C for about 1 hour to remove the resin, and then examined for the ratio of the reinforcing fiber bundle (A) and the average number of fibers (N) thereof. As a result, there was no difference between the results thereof and the results of the examination of the random mat.

Furthermore, the shaped plate obtained was heated at 300°C using an IR oven manufactured by NGK Kiln Tech, arranged on the horizontal portion of the mold shown in Fig. 6 set at 120°C so as to result in a charge ratio of 80%, and cold-pressed for 60 seconds at a pressure of 5 MPa. Thus, a shaped product having bosses and ribs as shown in Fig. 7 was obtained as in Example 1.

The shaped plate and shaped product obtained were evaluated in the same manners as in Example 1, and the results thereof are shown in Table 1.


[Example 3]

As a reinforcing fiber, carbon fibers obtained by widening carbon fibers "Tenax" (registered trademark) STS40-24KS (average fiber diameter, 7 μm; fiber width, 10 mm), manufactured by Toho Tenax Co., Ltd., to a fiber width of 20 mm were used, as in Example 1. As a cutting apparatus, two rotary cutters (cutting apparatuses a and b) were used in which spiral knives of a cemented carbide were disposed on a surface thereof. In the cutting apparatus a, the value of θ in expression (3) and the pitch of the blades were set to 45 degrees and 20 mm, respectively, so that the reinforcing fibers were able to be cut to a fiber length of 20 mm. In the cutting apparatus b, the value of θ in expression (3) and the pitch of the blades were set to 68 degrees and 8 mm, respectively, so that the reinforcing fibers were able to be cut to a fiber length of 8 mm.

With respect to an opening apparatus as well, two double pipes which each was the same as in Example 1 were prepared and disposed just under the cutting apparatuses a and b, respectively. In this stage, the velocity of the wind discharged through the small holes in each apparatus was set to 150 m/sec. Furthermore, the same tapered pipe as in Example 1 was welded to a lower part of the double pipe disposed just under the cutting apparatus a. A hole was formed, besides the hole for supplying a matrix resin, in the sidewall of the tapered pipe of Example 3 in a position which faced the hole for matrix resin supply, and this hole was connected with a rubber hose having an inner diameter of 1.5 mm to a lower part of the double pipe disposed just under the cutting apparatus b. Thus, the fibers cut with the cutting apparatus b move through the hose and are supplied to the tapered pipe, in which the fibers cut with the cutting apparatus a and the fibers cut with the cutting apparatus b are mixed with each other. As a matrix resin to be supplied through the sidewall of the tapered pipe, a PA6 powder (A1030FP, manufactured by Unichika) was used. Subsequently, the same table movable in X-Y directions as in Example 1 was disposed under the outlet of the tapered pipe, and suction was conducted from a lower part of the table with a blower. The supply rate of the reinforcing fibers from the cutting apparatus a and the supply rate of the reinforcing fibers from the cutting apparatus b were set at 81 g/min and 189 g/min, respectively, and the supply rate of the matrix resin was set at 550 g/min. The apparatus was operated under these conditions. Thus, a random mat was obtained in which the reinforcing fibers were mixed with the polyamide (PA6 powder). The fiber areal weight of the reinforcing fibers was 300 g/m$^2$.

The random mat obtained was examined for the ratio of the reinforcing fiber bundle (A) and the average number of fibers (N) thereof. As a result, the critical number of single fiber defined by expression (1) was 86, the ratio of the reinforcing fiber bundle (A) to all the mat fibers was 86%, the average numbers of fibers ($N_B$ and $N_C$, respectively) in the bundles of the reinforcing fibers (B) and the bundles of the reinforcing fibers (C) were 1,500 and 2,200, respectively, and the average number of fibers (N) in the reinforcing fiber bundle (A) was 1,800. The polyamide powder (PA6 powder) was dispersed in the reinforcing fibers without causing considerable unevenness.

Eight sheets of the random mat obtained were stacked and heated, at 4.0 MPa for 3 minutes, with a pressing apparatus heated at 260°C to obtain a fiber-reinforced composite material (shaped plate) having a thickness of 5.9 mm. The shaped plate obtained was subjected to an ultrasonic flaw detection test. As a result, neither unimpregnated portions nor voids were observed.

The shaped plate obtained was examined for tensile modulus along 0-degree and 90-degree directions. As a result, the ratio of moduli (E$\delta$) was found to be 1.05 and substantially no fiber alignment was observed. Thus, a material retaining isotropy was able to be obtained. Furthermore, this shaped plate was heated in an oven at 500°C for about 1 hour to remove the resin, and then examined for the ratio of the reinforcing fiber bundle (A) and the average number of fibers (N) thereof. As a result, there was no difference between the results thereof and the results of the examination of the random mat.

Furthermore, the shaped plate obtained was heated at 300°C using an IR oven manufactured by NGK Kiln Tech, arranged on the horizontal portion of the mold shown in Fig. 6 set at 120°C so as to result in a charge ratio of 80%, and cold-pressed for 60 seconds at a pressure of 5 MPa. Thus, a shaped product having bosses and ribs as shown in Fig. 7 was obtained as in Example 1.

The shaped plate and shaped product obtained were evaluated in the same manners as in Example 1, and the results thereof are shown in Table 1.

[Example 4]

As a reinforcing fiber, glass fibers EX-2500 (average fiber diameter, 15 $\mu$m; fiber width; 9 mm), manufactured by Nippon Electric Glass Co., Ltd., were used. As a cutting apparatus, a rotary cutter in which separating knives of a cemented carbide were disposed on a surface thereof and short blades provided at an angle of 90 degrees to the fibers were arranged obliquely. The width of each knife was 1 mm, and blades parallel with the direction of the fibers were provided between the knives for the purpose of obtaining smaller fiber bundles. In this operation, the value of $\theta$ in expression (3) was 42 degrees and the pitch of the blades was 10 mm, thereby cutting the reinforcing fibers to a fiber length of 10 mm. As an opening apparatus, the same apparatus as in Example 1 was used. The velocity of the wind discharged through the small holes was set to 250 m/sec by lowering the pressure of the compressor. This pipe was disposed just under the rotary cutter, and a tapered pipe was welded to a lower part thereof. A matrix resin was supplied through the sidewall of the tapered pipe. As the matrix resin, a powder obtained by freeze-pulverizing polycarbonate pellets "Panlite" (registered trademark) L-1225L, manufactured by Teijin Chemicals Ltd., and classifying the particles with 30-mesh and 200-mesh sieves. This powder had an average particle diameter of about 360 $\mu$m. Subsequently, a table movable in X-Y directions was disposed under the outlet of the tapered pipe, and suction was conducted from a lower part of the table with a blower. The supply rate of the reinforcing fibers and that of the matrix resin were set at 300 g/min and 600 g/min, respectively, and the apparatus was operated. Thus, a random mat was obtained in which the reinforcing fibers were mixed with the thermoplastic resin (polycarbonate powder). The fiber areal weight of the reinforcing fibers was 300 g/m$^2$.

The random mat obtained was examined for the ratio of the reinforcing fiber bundle (A) and the average number of fibers (N) thereof. As a result, the critical number of single fiber defined by expression (1) was 40, the ratio of the reinforcing fiber bundle (A) to all the mat fibers was 63%, the average number of fibers ($N_B$) in the bundles of reinforcing fibers (B) was 300, and the average number of fibers (N) in the reinforcing fiber bundle (A) was 300. The polycarbonate powder was dispersed in the reinforcing fibers without causing considerable unevenness.

Eight sheets of the random mat obtained were stacked and heated, at 4.0 MPa for 3 minutes, with a pressing apparatus heated at 300°C to obtain a fiber-reinforced composite material (shaped plate) having a thickness of 5.8 mm. The shaped plate obtained was subjected to an ultrasonic flaw detection test. As a result, neither unimpregnated portions nor voids were observed.

The shaped plate obtained was examined for tensile modulus along 0-degree and 90-degree directions. As a result, the ratio of moduli (E$\delta$) was found to be 1.14 and substantially no fiber alignment was observed. Thus, a material retaining isotropy was able to be obtained. Furthermore, this shaped plate was heated in an oven at 500°C for about 1 hour to remove the resin, and then examined for the ratio of the reinforcing fiber bundle (A) and the average number of fibers (N) thereof. As a result, there was no difference between the results thereof and the results of the examination of the random mat.

Furthermore, the shaped plate obtained was heated at 300°C using an IR oven manufactured by NGK Kiln Tech, arranged on the horizontal portion of the mold shown in Fig. 6 set at 120°C so as to result in a charge ratio of 80%, and cold-pressed for 60 seconds at a pressure of 5 MPa. Thus, a shaped product having bosses and ribs as shown in Fig. 7 was obtained as in Example 1.

The shaped product obtained was evaluated in the same manners as in Example 1, and the results thereof are shown in Table 1.

[Example 5]

A random mat was formed in the same manner as in Example 1, except that the supply rate of the reinforcing fibers was changed to 315 g/min and the supply rate of the matrix resin was changed to 390 g/min. The reinforcing fibers of the random mat obtained had an average fiber length of 8 mm, and the fiber areal weight of the reinforcing fibers was 350 g/m$^2$.

The random mat obtained was examined for the ratio of the reinforcing fiber bundle (A) and the average number of fibers (N) thereof. As a result, the critical number of single fiber defined by expression (1) was 86, the ratio of the reinforcing fiber bundle (A) to all the mat fibers was 66%, the average number of fibers ($N_B$) in the bundles of the reinforcing fibers (B) was 1,600, and the average number of fibers (N) in the reinforcing fiber bundle (A) was 1,600. The surfaces of the random mat obtained were observed, and as a result, the reinforcing fibers were found to be randomly dispersed without being aligned in a specific in-plane direction. Furthermore, the polycarbonate powder was dispersed in the reinforcing fibers without causing considerable unevenness.

Eight sheets of the random mat obtained were stacked and heated, at 4 MPa for 3 minutes, with a pressing apparatus heated at 300°C to obtain a fiber-reinforced composite material (shaped plate) having a thickness of 4.8 mm. The shaped plate obtained was subjected to an ultrasonic flaw detection test. As a result, neither unimpregnated portions nor voids were observed.

The shaped plate obtained was examined for tensile modulus along 0-degree and 90-degree directions. As a result, the ratio of moduli (E$\delta$) was found to be 1.05 and substantially no fiber alignment was observed. Thus, a material retaining isotropy was able to be obtained. Furthermore, this shaped plate was heated in an oven at 500°C for about 1 hour to remove the resin, and then examined for the ratio of the reinforcing fiber bundle (A) and the average number of fibers (N) thereof. As a result, there was no difference between the results thereof and the results of the examination of the random mat.

Furthermore, the shaped plate obtained was heated at 300°C using an IR oven manufactured by NGK Kiln Tech, arranged on the horizontal portion of the mold shown in Fig. 6 set at 120°C so as to result in a charge ratio of 80%, and cold-pressed for 60 seconds at a pressure of 5 MPa. Thus, a shaped product having bosses and ribs as shown in Fig. 7 was obtained as in Example 1.

The shaped plate and shaped product obtained were evaluated in the same manners as in Example 1, and the results thereof are shown in Table 1.

[Example 6]

In Example 3, the supply rate of reinforcing fibers (fiber length, 20 mm) from the cutting apparatus a, the supply rate of reinforcing fibers (fiber length, 8 mm) from the cutting apparatus b, and the supply rate of the matrix resin were set at 450 g/min, 450 g/min, and 1,830 g/min, respectively, to operate the apparatus. Thus, a random mat was obtained in which the reinforcing fibers were mixed with the polyamide-6. The fiber areal weight of the reinforcing fibers was 1,000 g/m$^2$.

The random mat obtained was examined for the ratio of the reinforcing fiber bundle (A) and the average number of fibers (N) thereof. As a result, the critical number of single fiber defined by expression (1) was 86, the ratio of the reinforcing fiber bundle (A) to all the mat fibers was 87%, the average numbers of fibers ($N_B$ and $N_C$, respectively) in the bundles of the reinforcing fibers (B) and the bundles of the reinforcing fibers (C) were 1,700 and 2,300, respectively, and the average number of fibers (N) in the reinforcing fiber bundle (A) was 2,000. The surfaces of the random mat obtained were observed, and as a result, the reinforcing fibers were found to be randomly dispersed without being aligned in a specific in-plane direction. Furthermore, the polyamide powder was dispersed in the reinforcing fibers without causing considerable unevenness.

Three sheets of the random mat obtained were stacked and heated, at 4 MPa for 3 minutes, with a pressing apparatus heated at 260°C to obtain a fiber-reinforced composite material (shaped plate) having a thickness of 6.0 mm. The shaped plate obtained was subjected to an ultrasonic flaw detection test. As a result, neither unimpregnated portions nor voids were observed.

The shaped plate obtained was examined for tensile modulus along 0-degree and 90-degree directions. As a result, the ratio of moduli (E$\delta$) was found to be 1.02 and substantially no fiber alignment was observed. Thus, a material retaining isotropy was able to be obtained. Furthermore, this shaped plate was heated in an oven at 500°C for about 1 hour to remove the resin, and then examined for the ratio of the reinforcing fiber bundle (A) and the average number of fibers (N) thereof. As a result, there was no difference between the results thereof and the results of the examination of the random mat.

Furthermore, the shaped plate obtained was heated at 300°C using an IR oven manufactured by NGK Kiln Tech, arranged on the horizontal portion of the mold shown in Fig. 6 set at 120°C so as to result in a charge ratio of 80%, and cold-pressed for 60 seconds at a pressure of 5 MPa. Thus, a shaped product having bosses and ribs as shown in Fig. 7 was obtained as in Example 1. The shaped plate and shaped product obtained were evaluated in the same manners as in Example 1, and the results thereof are shown in Table 1.

[Example 7]

In Example 3, the two cutting apparatuses to be used were replaced with two rotary cutters as used in Example 4, both having separating knives differing in fiber cutting length and blades parallel with the direction of the fibers. In the cutting apparatus a, the value of θ in expression (3) and the pitch of the blades were set to 45 degrees and 20 mm, respectively, so that the reinforcing fibers were able to be cut to a fiber length of 20 mm. In the cutting apparatus b, the value of θ in expression (3) and the pitch of the blades were set to 68 degrees and 8 mm, respectively, so that the reinforcing fibers were able to be cut to a fiber length of 8 mm.

With respect to a opening apparatus as well, two double pipes which each were the same as in Example 1 were prepared and disposed just under the cutting apparatuses a and b, respectively. In this stage, the velocity of the wind discharged through the small holes in each apparatus was set to 150 m/sec. Furthermore, the same tapered pipe as in Example 1 was welded to a lower part of the double pipe disposed just under the cutting apparatus a. A hole was formed, besides the hole for supplying a matrix resin, in the sidewall of the tapered pipe of Example 3 in a position which faced the hole for matrix resin supply, and this hole was connected with a rubber hose having an inner diameter of 1.5 mm to connect a lower part of the double pipe disposed just under the cutting apparatus b. Thus, the fibers cut with the cutting apparatus b move through the hose and are supplied to the tapered pipe, in which the fibers cut with the cutting apparatus a and the fibers cut with the cutting apparatus b are mixed with each other. As a matrix resin to be supplied through the sidewall of the tapered pipe, a PA6 powder (A1030FP, manufactured by Unichika) was used. Subsequently, the same table movable in X-Y directions as in Example 1 was disposed under the outlet of the tapered pipe, and suction was conducted from a lower part of the table with a blower. The supply rate of the reinforcing fibers from the cutting apparatus a and the supply rate of the reinforcing fibers from the cutting apparatus b were set at 81 g/min and 189 g/min, respectively, and the supply rate of the matrix resin was set at 550 g/min. The apparatus was operated under these conditions. As a result, a random mat was obtained in which the reinforcing fibers were mixed with the polyamide. The fiber areal weight of the reinforcing fibers was 300 g/m$^2$.

The random mat obtained was examined for the ratio of the reinforcing fiber bundle (A) and the average number of fibers (N) thereof. As a result, the critical number of single fiber defined by expression (1) was 86, the ratio of the reinforcing fiber bundle (A) to all the mat fibers was 80%, the average numbers of fibers ($N_B$ and $N_C$, respectively) in the bundles of the reinforcing fibers (B) and the bundles of the reinforcing fibers (C) were 500 and 800, respectively, and the average number of fibers (N) in the reinforcing fiber bundle (A) was 600. The polyamide powder was dispersed in the reinforcing fibers without causing considerable unevenness.

Eight sheets of the random mat obtained were stacked and heated, at 4.0 MPa for 3 minutes, with a pressing apparatus heated at 260°C to obtain a fiber-reinforced composite material (shaped plate) having a thickness of 5.9 mm. The shaped plate obtained was subjected to an ultrasonic flaw detection test. As a result, neither unimpregnated portions nor voids were observed. The shaped plate obtained was examined for tensile modulus along 0-degree and 90-degree directions. As a result, the ratio of moduli (Eδ) was found to be 1.03 and substantially no fiber alignment was observed. Thus, a material retaining isotropy was able to be obtained. Furthermore, this shaped plate was heated in an oven at 500°C for about 1 hour to remove the resin, and then examined for the ratio of the reinforcing fiber bundle (A) and the average number of fibers (N) thereof. As a result, there was no difference between the results thereof and the results of the examination of the random mat.

Furthermore, the shaped plate obtained was heated at 300°C using an IR oven manufactured by NGK Kiln Tech, arranged on the horizontal portion of the mold shown in Fig. 6 set at 120°C so as to result in a charge ratio of 80%, and cold-pressed for 60 seconds at a pressure of 5 MPa. Thus, a shaped product having bosses and ribs as shown in Fig. 7 was obtained as in Example 1.

The shaped plate and shaped product obtained were evaluated in the same manners as in Example 1, and the results thereof are shown in Table 1.

[Comparative Example 1]

A random mat was formed in the same manner as in Example 1, except that the velocity of the wind discharged through the small holes was regulated to 450 m/sec.

The random mat obtained was examined for the ratio of the reinforcing fiber bundle (A) and the average number of fibers (N) thereof. As a result, the critical number of single fiber defined by expression (1) was 86, the ratio of the reinforcing fiber bundle (A) to all the mat fibers was 43%, the average number of fibers ($N_B$) in the bundles of reinforcing fibers (B) was 800, and the average number of fibers (N) in the reinforcing fiber bundle (A) was 800.

The fiber bundles present in the random mat obtained were thin and were randomly dispersed without being aligned in a specific in-plane direction. The polycarbonate powder was dispersed in the reinforcing fibers without causing considerable unevenness.

In the same manner as in Example 1, eight sheets of the random mat obtained were stacked and heated, at 4 MPa for 3 minutes, with a pressing apparatus heated at 300°C to obtain a fiber-reinforced composite material (shaped plate) having a thickness of 4.8 mm. The shaped plate obtained was subjected to an ultrasonic flaw detection test. As a result, neither unimpregnated portions nor voids were observed.

The shaped plate obtained was examined for tensile modulus along 0-degree and 90-degree directions. As a result, the ratio of moduli (E$\delta$) was found to be 1.02 and substantially no fiber alignment was observed. Thus, a material retaining isotropy was able to be obtained. Furthermore, this shaped plate was heated in an oven at 500°C for about 1 hour to remove the resin, and then examined for the ratio of the reinforcing fiber bundle (A) and the average number of fibers (N) thereof. As a result, there was no difference between the results thereof and the results of the examination of the random mat.

Furthermore, the shaped plate obtained was heated at 300°C using an IR oven manufactured by NGK Kiln Tech, arranged on the horizontal portion of the mold shown in Fig. 6 set at 120°C so as to result in a charge ratio of 80%, and cold-pressed for 60 seconds at a pressure of 5 MPa to obtain a shaped product. However, the fibers and the resin were insufficiently filled into the boss and rib parts. The shaped plate and shaped product obtained were evaluated in the same manners as in Example 1, and the results thereof are shown in Table 1.

[Comparative Example 2]

A random mat was obtained in the same manner as in Example 1, except that the angle $\theta$ of the spiral blades of the rotary cutter was changed to 45 degrees and the blade pitch thereof was changed to 20 mm.

The random mat obtained was examined for the ratio of the reinforcing fiber bundle (A) and the average number of fibers (N) thereof. As a result, the critical number of single fiber defined by expression (1) was 86, the ratio of the reinforcing fiber bundle (A) to all the mat fibers was 71%, the average number of fibers ($N_C$) in the bundles of the reinforcing fibers (C) was 2,200, and the average number of fibers (N) in the reinforcing fiber bundle (A) was 2,200. The surfaces of the random mat obtained were observed, and as a result, the reinforcing fibers were found to be randomly dispersed without being aligned in a specific in-plane direction. Furthermore, the polycarbonate powder was dispersed in the reinforcing fibers without causing considerable unevenness.

Eight sheets of the random mat obtained were stacked and heated, at 4 MPa for 3 minutes, with a pressing apparatus heated at 300°C to obtain a fiber-reinforced composite material (shaped plate) having a thickness of 4.8 mm. The shaped plate obtained was subjected to an ultrasonic flaw detection test. As a result, neither unimpregnated portions nor voids were observed.

The shaped plate obtained was examined for tensile modulus along 0-degree and 90-degree directions. As a result, the ratio of moduli (E$\delta$) was found to be 1.03 and substantially no fiber alignment was observed. Thus, a material retaining isotropy was able to be obtained. Furthermore, this shaped plate was heated in an oven at 500°C for about 1 hour to remove the resin, and then examined for the ratio of the reinforcing fiber bundle (A) and the average number of fibers (N) thereof. As a result, there was no difference between the results thereof and the results of the examination of the random mat.

Furthermore, the shaped plate obtained was heated at 300°C using an IR oven manufactured by NGK Kiln Tech, arranged on the horizontal portion of the mold shown in Fig. 6 set at 120°C so as to result in a charge ratio of 80%, and cold-pressed for 60 seconds at a pressure of 5 MPa to obtain a shaped product. However, the fibers and the resin were not substantially filled into the boss and rib parts. Consequently, although it was attempted to evaluate this shaped product for tensile modulus and Vf in the same manners as in Example 1, the measurements were impossible.

[Comparative Example 3]

In Example 3, the supply rate of reinforcing fibers (fiber length, 20 mm) from the cutting apparatus a, the supply rate of reinforcing fibers (fiber length, 8 mm) from the cutting apparatus b, and the supply rate of the matrix resin were set at 216 g/min, 54 g/min, and 550 g/min, respectively, to operate the apparatus. As a result, a random mat was obtained in which the reinforcing fibers were mixed with the polyamide-6. The fiber areal weight of the reinforcing fibers was 300 g/m$^2$.

The random mat obtained was examined for the ratio of the reinforcing fiber bundle (A) and the average number of fibers (N) thereof. As a result, the critical number of single fiber defined by expression (1) was 86, the ratio of the reinforcing fiber bundle (A) to all the mat fibers was 85%, the average numbers of fibers ($N_B$ and $N_C$, respectively) in the bundles of the reinforcing fibers (B) and the bundles of the reinforcing fibers (C) were 1,500 and 2,200, respectively, and the average number of fibers (N) in the reinforcing fiber bundle (A) was 2,100. The surfaces of the random mat obtained were observed, and as a result, the reinforcing fibers were found to be randomly dispersed without being aligned in a specific in-plane direction. Furthermore, the polyamide powder was dispersed in the reinforcing fibers without causing considerable unevenness.

Eight sheets of the random mat obtained were stacked and heated, at 4 MPa for 3 minutes, with a pressing apparatus heated at 260°C to obtain a fiber-reinforced composite material (shaped plate) having a thickness of 4.8 mm. The shaped plate obtained was subjected to an ultrasonic flaw detection test. As a result, neither unimpregnated portions nor voids were observed.

The shaped plate obtained was examined for tensile modulus along 0-degree and 90-degree directions. As a result, the ratio of moduli (E$\delta$) was found to be 1.02 and substantially no fiber alignment was observed. Thus, a material retaining isotropy was able to be obtained. Furthermore, this shaped plate was heated in an oven at 500°C for about 1 hour to remove the resin, and then examined for the ratio of the reinforcing fiber bundle (A) and the average number of fibers (N) thereof. As a result, there was no difference between the results thereof and the results of the examination of the random mat.

Furthermore, the shaped plate obtained was heated at 300°C using an IR oven manufactured by NGK Kiln Tech, arranged on the horizontal portion of the mold shown in Fig. 6 set at 120°C so as to result in a charge ratio of 80%, and cold-pressed for 60 seconds at a pressure of 5 MPa to obtain a shaped product. However, the fibers and the resin had been insufficiently filled into the boss and rib parts.

The shaped product obtained was evaluated in the same manners as in Example 1, and the results thereof are shown in Table 1.

[Comparative Example 4]

A polyamide-6 resin (1013B, manufactured by Ube Industries) was supplied as a matrix resin to a hopper of a screw type extruder adjusted at a temperature of 260°C, and the molten resin was measured at a predetermined amount by a rotation speed of the gear pump and supplied to a crosshead die for impregnation by means of the extruder (FS50, manufactured by Ikegai) set at a temperature of 260°C. Meanwhile, carbon fibers obtained by widening carbon fibers "Tenax" (registered trademark) STS40-24KS (average fiber diameter, 7 $\mu$m; fiber width, 10 mm), manufactured by Toho Tenax Co., Ltd., to a fiber width of 20 mm were supplied as a reinforcing fiber to the upstream side of the crosshead die for impregnation which was equipped with a slit die having a slot-shaped aperture at the downstream end. Thus, the reinforcing fibers were impregnated with the resin and degassed, and a tape prepreg discharged from the downstream aperture and constituted by the reinforcing fibers and the polyamide-6 was cooled and wound on a reel. In this tape prepreg, the volume fraction of the reinforcing fibers was 30%.

The tape prepreg obtained was slit into a width of 10 mm, subsequently cut into 10 mm, and randomly scattered in a flat-plate mold. This prepreg was heated, at 4.0 MPa for 3 minutes, with a pressing apparatus heated at 260°C to obtain a fiber-reinforced composite material (shaped plate) having a thickness of 5.8 mm. The shaped plate obtained was subjected to an ultrasonic flaw detection test. As a result, neither unimpregnated portions nor voids were observed.

The shaped plate obtained was examined for tensile modulus along 0-degree and 90-degree directions. As a result, the ratio of moduli (E$\delta$) was found to be 1.13 and substantially no fiber alignment was observed. Thus, a material retaining isotropy was able to be obtained. Furthermore, this shaped plate was heated in an oven at 500°C for about 1 hour to remove the resin, and then examined for the ratio of the reinforcing fiber bundle (A) and the average number of fibers (N) thereof. As a result, the critical number of single fiber defined by expression (1) was 86, the ratio of the reinforcing fiber bundle (A) to all the mat fibers was 97%, the average number of fibers (N$_B$) in the bundles of the reinforcing fibers (B) was 11,000, and the average number of fibers (N) in the reinforcing fiber bundle (A) was 11,000.

Furthermore, the shaped plate obtained was heated at 300°C using an IR oven manufactured by NGK Kiln Tech, arranged on the horizontal portion of the mold shown in Fig. 6 set at 120°C so as to result in a charge ratio of 80%, and cold-pressed for 60 seconds at a pressure of 5 MPa to obtain a shaped product having bosses and ribs. The shaped product obtained was evaluated, and the results thereof are shown in Table 1. The horizontal portion and the rib part had a tensile modulus ratio of 1.53, showing that the shaped product had slightly poor isotropy.

[Table 1]

| | | | Ex. 1 | Ex. 2 | Ex. 3 | Ex. 4 | Ex. 5 | Ex. 6 | Ex. 7 | Comp. Ex. 1 | Comp. Ex. 2 | Comp. Ex. 3 | Comp. Ex. 4 |
|---|---|---|---|---|---|---|---|---|---|---|---|---|---|
| Random mat | Kind of reinforcing fibers* | | CF | CF | CF | GF | CF | CF | CF | CF | CF | CF | CF |
| | Reinforcing fiber bundles (A) | Volume ratio to all the mat fibers (vol%) | 61 | 93 | 86 | 63 | 66 | 87 | 80 | 43 | 71 | 85 | - |
| | | Average number of fibers (N) | 1500 | 1900 | 1800 | 300 | 1600 | 2000 | 600 | 800 | 2200 | 2100 | - |
| | Reinforcing fibers (B) | Average fiber length (mm) | 8 | 8 | 8 | 10 | 8 | 8 | 8 | 8 | - | 8 | 8 |
| | | Mass ratio to all the mat fibers (%) | 100 | 100 | 70 | 100 | 100 | 50 | 70 | 100 | 0 | 20 | 100 |
| | | Average number of fibers ($N_B$) | 1500 | 1900 | 1500 | 300 | 1600 | 1700 | 500 | 800 | - | 1500 | - |
| | Reinforcing fibers (C) | Average fiber length (mm) | - | - | 20 | - | - | 20 | 20 | - | 20 | 20 | - |
| | | Mass ratio to all the mat fibers (%) | 0 | 0 | 30 | 0 | 0 | 50 | 30 | 0 | 100 | 80 | 0 |
| | | Average number of fibers ($N_C$) | - | - | 2200 | - | - | 2300 | 800 | - | 2200 | 2200 | - |
| | Average fiber length ratio | Reinforcing fibers(C)/ reinforcing fibers (B) | - | - | 2.5 | - | - | 2.5 | 2.5 | - | - | 2.5 | - |
| | Fiber areal weight (g/m²) | | 200 | 300 | 300 | 300 | 350 | 1000 | 300 | 200 | 200 | 300 | 300 |
| | Thermoplastic resin** | | PC | PA66 | PA6 | PC | PC | PA6 | PA6 | PC | PC | PA6 | PA6 |
| Flat plate | Tensile-modulus ratio | | 1.03 | 1.07 | 1.05 | 1.14 | 1.05 | 1.02 | 1.03 | 1.02 | 1.03 | 1.02 | |
| | Reinforcing fiber bundles (A) | Volume ratio to all the mat fibers (vol%) | 61 | 93 | 86 | 63 | 66 | 87 | 80 | 43 | 71 | 85 | 97 |
| | | Average number of fibers | 1500 | 1900 | 1800 | 300 | 1600 | 2000 | 600 | 800 | 2200 | 2100 | 11000 |

(continued)

| | | Ex. 1 | Ex. 2 | Ex. 3 | Ex. 4 | Ex. 5 | Ex. 6 | Ex. 7 | Comp. Ex. 1 | Comp. Ex. 2 | Comp. Ex. 3 | Comp. Ex. 4 |
|---|---|---|---|---|---|---|---|---|---|---|---|---|
| Shaped product | Molding pressure (MPa) | 5 | 5 | 5 | 5 | 5 | 5 | 5 | 5 | 5 | 5 | 5 |
| | Filling property | + | + | + | + | + | + | + | ± | - | ± | + |
| | Tensile-modulus ratio between rib part and horizontal portion | 1.04 | 1.12 | 1.06 | 1.09 | 1.07 | 1.05 | 1.06 | 1.10 | - | 1.12 | 1.53 |
| | Vf (vol%) — Horizontal portion | 20 | 30 | 30 | 20 | 35 | 30 | 30 | 21 | - | 32 | 32 |
| | Vf (vol%) — Rib part | 20 | 30 | 30 | 20 | 35 | 30 | 30 | 18 | - | 27 | 29 |

*Kind of reinforcing fibers: CF = carbon fibers, GF = glass fibers
** Thermoplastic resin: PC = polycarbonate, PA66 = polyamide-66, PA6 = polyamide-6

Industrial Applicability

The random mat of the invention is suitable for use as a preform for a shaped product of a fiber-reinforced composite material. Since the random mat has excellent flowability during molding, upright portions of a complicated three-dimensional shape, such as ribs or bosses, which longitudinally extend from a horizontal portion can be easily formed at a relatively low pressure. Consequently, the shape of a product can be formed from the random mat of the invention using a minimum necessary amount of materials, and a trimming step can be eliminated. A considerable reduction in the amount of materials to be discarded and the resultant cost reduction can hence be expected. Furthermore, the random mat of the invention can be used as a preform for various constituent members, such as inside sheets, outside sheets, and constituent members for motor vehicles, frames or housings of various electrical products or machines, and the like.

While the invention has been described in detail and with reference to specific embodiments thereof, it will be apparent to one skilled in the art that various changes and modifications can be made therein without departing from the spirit and scope thereof.

This application is based on a Japanese patent application filed on December 22, 2011 (Application No. 2011-281509), the contents thereof being incorporated herein by reference.

Description of the Reference Numerals and Signs

1. Reinforcing fibers
2. Pinch roller
3. Rubber roller
4. Rotary cutter main body
5. Blade
6. Cut reinforcing fibers
7. Pitch of blades
8. Blade parallel with the direction of fibers
9. Horizontal portion
10. Sidewall
11 A. Rib 1
11B. Rib 2
11C. Rib 3
12A. Boss 1
12B. Boss 2
12C. Boss 3
12D. Boss 4
13. Portion in rib part where specimen for tensile modulus measurement is cut out
14. Portion in horizontal portion where specimen for tensile modulus measurement is cut out

**Claims**

1. A random mat comprising reinforcing fibers having a fiber length of 3 to 50 mm and satisfies the following i) to v):

   i) a content of reinforcing fibers having a fiber length of 3 mm or more and less than 15 mm is 50 to 100% by mass based on all the reinforcing fibers contained in the random mat, and a content of reinforcing fibers having a fiber length of 15 mm or more and 50 mm or less is 0 to 50% by mass based on all the reinforcing fibers contained in the random mat;
   ii) a fiber areal weight of the reinforcing fibers is 25 to 10,000 g/m$^2$;
   iii) the reinforcing fibers include a fiber bundle constituted by the reinforcing fibers of less than a critical number of single fiber, the critical number being defined by the following expression (1), single fibers, and a reinforcing fiber bundle (A) constituted by the reinforcing fibers of the critical number of single fiber or more;
   iv) a ratio of the reinforcing fiber bundle (A) to all the reinforcing fibers contained in the random mat is 50 vol% or more and less than 99 vol%; and
   v) an average number of fibers (N) in the reinforcing fiber bundle (A) satisfies the following expression (2):

$$Critical\ number\ of\ single\ fiber = 600/D \qquad (1)$$

$$1.5 \times 10^4/D^2 < N < 3 \times 10^5/D^2 \qquad (2)$$

wherein D is the average fiber diameter ($\mu$m) of single reinforcing fibers.

2. The random mat according to claim 1,
   wherein the reinforcing fibers are at least one selected from the group consisting of a carbon fiber, an aramid fibers, and a glass fibers.

3. The random mat according to claim 1 or 2,
   wherein a content of the reinforcing fibers having a fiber length of 3 mm or more and less than 15 mm is 90 to 100% by mass based on all the reinforcing fibers contained in the random mat, and
   a content of the reinforcing fibers having a fiber length of 15 mm or more and 50 mm or less is 0 to 10% by mass based on all the reinforcing fibers contained in the random mat.

4. The random mat according to any one of claims 1 to 3,
   wherein with respect to the reinforcing fibers having a fiber length of 3 mm or more and less than 15 mm, an average number of fibers ($N_B$) in a reinforcing fiber bundle ($A_B$) ach constituted by the reinforcing fibers of the critical number of single fiber or more satisfies the following expression (2B):

$$1.5 \times 10^4/D_B{}^2 < N_B < 3 \times 10^5/D_B{}^2 \qquad (2B)$$

wherein $D_B$ is the average fiber diameter ($\mu$m) of single reinforcing fibers.

5. The random mat according to any one of claims 1 to 4,
   wherein with respect to the reinforcing fibers having a fiber length of 15 mm or more and 50 mm or less, an average number of fibers ($N_C$) in a reinforcing fiber bundle ($A_C$) constituted by the reinforcing fibers of the critical number of single fibers or more satisfies the following expression (2C):

$$5.0 \times 10^4/D_C{}^2 < N_C < 3 \times 10^5/D_C{}^2 \qquad (2C)$$

wherein $D_C$ is the average fiber diameter ($\mu$m) of single reinforcing fibers.

6. The random mat according to claim 5,
   wherein the average number of fibers ($N_C$) is larger than the average number of fibers ($N_B$).

7. The random mat according to any one of claims 1 to 6,
   wherein a ratio of an average fiber length of the reinforcing fibers having a fiber length of 15 mm or more and 50 mm or less to an average fiber length of the reinforcing fibers having a fiber length of 3 mm or more and less than 15 mm is 1.5 to 10.

8. The random mat according to any one of claims 1 to 7, further comprising a thermoplastic resin,
   wherein a content of the thermoplastic resin in the random mat is 50 to 1,000 parts by mass per 100 parts by mass of the reinforcing fibers.

9. A fiber-reinforced composite material obtained by heating and pressing the random mat according to claim 8.

10. A shaped product obtained by molding the random mat according to claim 8 or the fiber-reinforced composite material according to claim 9.

11. The shaped product according to claim 10, comprising an upright portion.

**12.** A manufacturing method for a fiber-reinforced composite material, the method comprising:

> using the random mat according to claim 8;
> impregnating the thermoplastic resin; and
> heating and pressing the random mat.

**13.** The manufacturing method for a fiber-reinforced composite material according to claim 12, wherein the pressing is conducted at a pressure less than 10 MPa.

**14.** A manufacturing method for a shaped product, **characterized in that** the random mat according to claim 8 or the fiber-reinforced composite material according to claim 9 is press-molded at a pressure less than 10 MPa.

**15.** The manufacturing method according to claim 14, wherein the shaped product has a plurality of bosses and a plurality of ribs.

**16.** The manufacturing method according to claim 14 or 15, wherein the shaped product is a box-shaped object substantially of a rectangular parallelepiped shape, and the box-shaped object having a boss at each of at least four corners and having one or more rib parts arranged so as to partition an inside of the box-shaped object into two or more sections.

FIG.1

FIG.2

FIG.3

FIG.4

*FIG.5*

FIG.6

A-A

B-B

C-C

FIG.7

FIG.8

13

14

## INTERNATIONAL SEARCH REPORT

| International application No. |
| --- |
| PCT/JP2012/083146 |

A. CLASSIFICATION OF SUBJECT MATTER

*D04H1/72*(2012.01)i, *B29C43/18*(2006.01)i, *C08J5/04*(2006.01)i

According to International Patent Classification (IPC) or to both national classification and IPC

B. FIELDS SEARCHED

Minimum documentation searched (classification system followed by classification symbols)
D04H1/00-18/04, B29B11/16, B29B15/08-15/14, C08J5/04-5/10, C08J5/24, B29C39/00-39/24, B29C39/38-39/44, B29C43/00-43/34, B29C43/44-43/48, B29C43/52-43/58

Documentation searched other than minimum documentation to the extent that such documents are included in the fields searched
Jitsuyo Shinan Koho          1922-1996    Jitsuyo Shinan Toroku Koho    1996-2013
Kokai Jitsuyo Shinan Koho    1971-2013    Toroku Jitsuyo Shinan Koho    1994-2013

Electronic data base consulted during the international search (name of data base and, where practicable, search terms used)
WPI

C. DOCUMENTS CONSIDERED TO BE RELEVANT

| Category* | Citation of document, with indication, where appropriate, of the relevant passages | Relevant to claim No. |
| --- | --- | --- |
| Y | JP 2011-241338 A  (Teijin Ltd.), 01 December 2011 (01.12.2011), claims 1, 5; paragraphs [0001], [0021] to [0024], [0029], [0056], [0057], [0062]; examples (Family: none) | 1-16 |
| Y | JP 2010-235779 A  (Toray Industries, Inc.), 21 October 2010 (21.10.2010), claim 1; paragraphs [0010], [0018], [0022] & US 2011/0143110 A1 claim 1; paragraphs [0014], [0051], [0064] | 1-16 |
| A | JP 2011-178890 A  (Teijin Ltd.), 15 September 2011 (15.09.2011), claims 1 to 3; paragraph [0001]; examples (Family: none) | 1-16 |

☐ Further documents are listed in the continuation of Box C.        ☐ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 13 March, 2013 (13.03.13) | 26 March, 2013 (26.03.13) |

| Name and mailing address of the ISA/ | Authorized officer |
| --- | --- |
| Japanese Patent Office | |
| Facsimile No. | Telephone No. |

Form PCT/ISA/210 (second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009114611 A
- JP 2009114612 A

- JP 2011281509 A